# EUROPÄISCHE PATENTSCHRIFT

(11) **EP 1 568 176 B1**
(45) Veröffentlichungstag und Bekanntmachung des Hinweises auf die Patenterteilung: **11.07.2007**
(21) Anmeldenummer: 03782125.3
(22) Anmeldetag: 02.12.2003
(51) Int. Cl.: H04L 12/28

(54) **Verfahren der Datenübertragung zwischen einem ersten und einem zweiten Telekommunikationssystem, Telekommunikationsanordnung und Telekommunikations-Endsystem zur Durchführung des Verfahrens**
Method for transmitting data between a first and a second telecommunications system, telecommunications arrangement and telecommunications end system for carrying out the method
Procédé de transmission de données entre un premier et un deuxième système de télécommunication, dispositif de télécommunication et système de télécommunication terminal pour la mise en oeuvre du procédé

(30) Priorität: 02.12.2002 DE 10257157; 02.12.2002 DE 10256393; 04.04.2003 DE 10316737; 06.05.2003 DE 10321258; 18.08.2003 DE 10338993
(43) Veröffentlichungstag der Anmeldung: 31.08.2005
(73) Patentinhaber: Teles AG Informationstechnologien, 10587 Berlin (DE)
(72) Erfinder: SCHINDLER, Sigram, 14129 Berlin (DE); HESSE, Jan, 10555 Berlin (DE); LÜDTKE, Karsten, 12167 Berlin (DE); WITKE, Marius, 10439 Berlin (DE); LEGNER, Stefan, 35041 Marburg (DE); REIMERS, Peter, 12053 Berlin (DE)
(74) Vertreter: Müller, Wolfram Hubertus
(86) Internationale Anmeldenummer: PCT/DE2003/004002
(87) Internationale Veröffentlichungsnummer: WO 2004/051924

(56) Entgegenhaltungen:
- EP-A- 0 605 349
- EP-A- 1 094 646
- DE-A- 19 700 357
- US-A1- 2002 103 912
- TAO J ET AL: "INTERNET ACCESS VIA BASEBAND AND BROADBAND ISDN GATEWAYS" PROCEEDINGS OF THE ANNUAL INTERNATIONAL PHOENIX CONFERENCE ON COMPUTERS AND COMMUNICATIONS, PHOENIX, Bd. CONF. 13, 12. April 1994 (1994-04-12), Seiten 485-490, XP000462600

## Beschreibung

Die Erfindung betrifft ein Verfahren zur Datenübertragung zwischen einem ersten und einem zweiten Telekommunikations (TK)-System sowie eine Telekommunikationsanordnung und ein TK-Endsystem zur Durchführung eines solchen Verfahrens. Insbesondere betrifft die Erfindung:
- ein Verfahren zur Effizienzsteigerung der Kommunikation zwischen einem ersten und einem zweiten Telekommunikations (TK)-System sowie
- TK-System-Komponenten zur Erweiterung eines TK-Systems bzw. eines TK-Endsystems für die Durchführung des Verfahrens.

Dieses im folgenden auch als "Koppel-Puls"-Technik (KPT) bezeichnete Verfahren und seine System-Komponenten stellen eine Weiterentwicklung der unter dem Stichwort "Short-Hold" bekannten Technik dar, indem sie - anders als diese Technik, die nur TK-Endgeräte und physikalische Verbindungen betrachtet - auch andere TK-Systeme und höhere logische Verbindungen und Assoziationen für ähnliche aber weitergehende Aufgaben zum Einsatz bringen kann und damit wesentlich größere Vorteile zu erzielen gestattet.

### Hintergrund der Erfindung

Es ist bekannt, zur Reduktion der Kosten von Femsprech-Verbindungen in einem TK-Netz solche Verbindungen automatisch abzubauen, die für eine bestimmte Zeit inaktiv sind. Ein derartiges Verfahren des Verbindungs-Managements wird traditionell als "Short Hold Modus" bezeichnet. Das Abschalten einer Verbindung erfolgt dabei üblicherweise, nachdem ein in seinem Startwert vorgegebener "inactivity timer" abgelaufen ist. Der Startwert gibt an, nach wie vielen Sekunden der Inaktivität auf der TK-Verbindung der Abbau ihrer physikalischen Verbindung erfolgen soll - was i.d.R. den Abbau der Verbindung insgesamt impliziert. Bis zum Ablauf des "inactivity timer" bleibt die physikalische Verbindung in der TK-Verbindung aufgebaut. Letztere besteht gemäß dem "Open Systems Interconnection Referenz-Modell (kurz: OSI-Modell)" immer aus bis zu 7 übereinander liegenden "logischen Verbindungen", wobei ihre unterste hier als "physikalische Verbindung" bezeichnet wird. Diese logischen Verbindungen repräsentieren die "logischen Schichten" jedes Kommunikationsvorganges. Jeder Kommunikationsvorgang kann innerhalb seiner höchsten logischen "Kommunikationsschicht", der Schicht 7 (Layer 7), weitere logische "Anwendungsschichten" beinhalten, die vom OSI-Referenzmodell i.d.R. nicht betrachtet werden: Diese logische Anwendungsschichtung kann nämlich von Anwendung zu Anwendung grundsätzlich unterschiedlich sein, während die logische OSI-Modell-Schichtung für alle Kommunikationsvorgänge grundsätzlich identisch ist.

Logische Verbindungen braucht es in einem Kommunikationsvorgang nicht auf allen Schichten zu geben. Beruht ein Kommunikationsvorgang auf einer logischen Schicht auf einer Assoziation - also einer potentiellen "Kommunikationspaarung" für verbindungslose Kommünikationsaktivitäten - gilt das OSI-Refer6nzmodell und alles hier Gesagte sinngemäß.

Nach dem Abbau einer logischen Verbindung in einem Kommunikationsvorgang, speziell der physikalischen Verbindung (auf L1), können die darüber liegenden logischen Verbindungen seiner TK-Verbindung nur dann bestehen bleiben, wenn die jeweils miteinander kommunizierenden logischen Li-Einheiten (2 kleinergleich i kleinergleich 7) so entworfen und implementiert sind, dass sie diesen temporären Wegfall dieser von einigen von ihnen benutzten logischen (speziell: physikalischen) Verbindung in jeder Situation tolerieren können, dafür also spezielle Mechanmismen enthalten - was i.d.R. nicht der Fall ist.

Speziell für den Abbau der physikalischen Verbindung ist ein solches "Short Hold"-Verfahren in der WO 99/59308 A1 beschrieben. Dieses Dokument sieht dabei eine Steuerung des Short Hold Modus in Abhängigkeit von dem Gebührentakt eines Kommunikationssystems und in Abhängigkeit von Zeitintervallen vor, die ein Nutzer vorgibt.

Es besteht ein Bedarf an einem Verfahren, das weitergehende Ziele als die WO 99/59308 A1 anstrebt.
- Erstens sollen nicht nur verbindungorientierte, sondern auch verbindungslose Kommunikationvorgänge, sogenannte Assoziationen betrachtet werden.
- Zweitens soll es möglich sein, Verbindungen und Assoziationen effizienter zu managen, als es mit irgend einem der früher bekannten Verfahren tatsächlich möglich ist.
- Drittens soll es in einem Kommunikationsvorgang den Abbau einer oder mehrerer seiner logischen Verbindungen oder Assoziationen, etwa der physikalischen Verbindung, nur derart vorsehen, dass die mittels der verbleibenden logischen Verbindungen/Assoziationen kommunizierenden Li-Einheiten davon absolut nichts bemerken und so den temporären Wegfall auch nicht durch explizit dafür vorgesehene Mechanismen tolerabel zu machen brauchen - also nur derart, dass der Abbau dieser einen oder mehreren logischen Verbindung/en bzw. Assoziation/en in diesem gesamtheitlichen Kommunikationsvorgang seine anderen logischen Verbindungen bzw. Assoziationen davon nichts gewahr werden läßt.
- Viertens sollen die in den Kommunikationsvorgang involvierten und hier betrachteten TK-Systeme keine TK-Endsysteme zu sein brauchen, sondern beispielsweise auch TK-Netz-interne Systeme sein können.
- Fünftens soll es in diesem Kommunikationsvorgang auf jeder seiner 7 Schichten des OSI-Referenzmodells eine Untergliederung in weitere logische Schichten und zugehörige Verbindungen/Assoziationen geben können. Und alles hier bezüglich der 7 OSI-Schichten Gesagte gilt sinngemäß auch für alle ihre Untergliederungen.

Die Firma AVM Computersysteme Vertriebs GmbH in 10559 Berlin Deutschland bietet unter der Bezeichnung "FritzlWeb" eine Kommuniktionssoftware an, die einen Short-Hold Modus bei der Einwahl in das Internet per ISDN realisiert. Eine Timer Funktion baut eine ISDN-Verbindung, die hier "physikalische Verbindung" genannt wird, automatisch ab, nachdem sie eine bestimmte Zeit nicht genutzt wird. Allerdings wird hier bei Internet-Benutzung außer der L1-Verbindung gleich auch noch die L3-Assoziation in der Internet-Verbindung zwischen dem einen TK-Endsystem, dem PC eines Internet-Benutzers, und dem anderen TK-Endsystem, einem Internet-Server, abgebaut. Die Intemet-Verbindung wird wieder komplett aufgebaut, wenn vom Benutzer erneut Daten angefordert werden. Dabei kann zwar u.U. ein kostengünstiger Abbau der Internet-Verbindung durch Berücksichtigung des Gebührentakts erreicht werden. Aber bei ihrem neuerlichen Aufbau erhält das TK-Endsystem i.d.R. eine andere IP-Adresse als es vor dem L1-VerbindungsAbbau hatte.

Der Fritz!Web-Verbindungsab-/aufbau ist deshalb für die kommunizierenden Einheiten nicht transparent und auch eine anzustrebende Kostenminimierung kann nicht in weitgehender Weise verwirklicht werden.

Die EP 0 605 349 A2 beschreibt ein TK-Netz, das sich - anders als das hier angemeldete Verfahren - auf einen "end-to-end"-leitungsvermittelten schmalbandigen Datennetz-Dienst beschränkt. Es sind eine Vielzahl von Datenendstationen vorgesehen, die jeweils - ganz ISDN-konform - über einen Steuerkanal und mindestens zwei Datenkanäle mit dem leitungsvermittelten Datennetz verbunden sind und die jeweils ein Transaktionsprogramm benutzen. Zum Übertragen von Daten wird eine Kanalverbindung zwischen einer ersten Datenendstation und einer zweiten Datenendstation eingerichtet. Nach Ablauf eines vorgegebenen Zeitintervalls nach dem letzten Übertragen oder Empfangen eines Rahmens auf dieser Kanalverbindung zwischen den Transaktionsprogrammen wird sie beendet, ohne den logischen Dialog - also etwa eine L7-Assoziadon/Verbindung - zwischen den Transaktionsprogrammen der beiden "Datenendstationen" zu unterbrechen.

Es ist mit dem Verbindungsab-/aufbau-Verfahren der EP 0 605 349 A2 nicht möglich, Kommunikationsvorgänge über das Internet zu unterstützen und/oder völlig transparent für die kommunizierenden Einheiten zu gestalten. Es kann auch eine anzustrebende Kostenminimierung nicht erreicht werden, da, genau wie bei Fritz!Web, nur die beiden Endstationen Involviert sind und auf die Unterstützung durch ein weiteres TK-Systen, etwa ein TK-Netz-internes System verzichtet wird. Und schließlich betrachtet die EP 0 605 349 A2 nur die ISDN-Anschlüsse bei den Endgeräten der Internet-Benutzer, nicht dagegen die hier besonders interessierende Situation, dass die kommunizierenden TK-Systeme darüber hinausgehend einerseits auf einen ISDN-Anschluss gar nicht angewiesen sind und andererseits auch noch Netzanschlüsse an weitere TK-Netze besitzen können, die in ihre Kommunikation involviert sein können.

Die US 6 308 281 B1 beschreibt ein Verfahren zum Aufrechterhalten einer logischen Verbindung zwischen einem Client und einem Gateway über eine Mehrzahl physikalischer Verbindungen. Dabei wird zwischen dem Client und dem Gateway eine erste physikalische Verbindung und mindestens eine zweite physikalische Verbindung eingerichtet. Wenn die erste physikalische Verbindung unterbrochen wird, so bleiben die logischen Verbindungen zwischen dem Client und dem Gateway erhalten, wobei diese höheren logischen Verbindungen nunmehr über die zweite physikalische Verbindung unterstützt wird. Das bekannte Verfahren ermöglicht das Aufrechterhalten einer L7-Assoziation/Verbindung zwischen einem Client und einem Gateway auch für den Fall, dass die ursprüngliche physikalische Verbindung unterbrochen ist und nicht mehr aufgebaut werden kann oder soll. Nachteilig müssen parallel mehrere physikalische Verbindungen zwischen dem Client und dem Gateway bereitgehalten werden. Die US 6 308 281 B1 setzt also mehrere parallele physikalische Verbindungen zwischen Client und einem Gateway voraus.

Aus der DE 197 00 357 A1 ist ein Verfahren zur Anbindung eines Kommunikationsendgerätes an ein Datennetz bekannt, bei dem eine bestehende gebührenpflichtige Verbindung zwischen einem Kommunikationsendgerät und einem Datennetz unterbrochen wird, sobald während einer bestimmten ersten Zeitspanne keine Daten mehr über diese gebührenpflichtige Verbindung übertragen worden sind, oder wenn eine solche Unterbrechung durch einen Benutzer des Kommunikationsendgerätes mit Hilfe hierfür vorgesehener Mittel der Benutzeroberfläche manuell bewirkt wird. Dabei bleibt eine logische Verbindung des Kommunikationsendgerätes mit dem Datennetz während einer solchen Unterbrechung jedoch bis zum Ablauf einer zweiten Zeitspanne oder dauerhaft bestehen, und es wird eine gebührenpflichtige Verbindung zwischen dem Kommunikationsendgerät und dem Datennetz aufgebaut, sobald Daten zwischen dem Kommunikationsendgerät und dem Datennetz zu übertragen sind. Dabei betriff der Auf- und Abbau einer gebührenpflichtigen Verbindung nur die L1-Verbindung zwischen dem Kommunikationsendgerät und dem Datennetz.

### Aufgabe der Erfindung

Der vorliegenden Erfindung liegt die Aufgabe zu Grunde, für einen Kommunikationsvorgang zwischen TK-Systemen
- sowohl ein Verfahren als auch eine Telekommunikationsanordnung als auch TK-System-Komponenten zur Erweiterung eines TK-Systems bzw. eines TK-Endsystems zur Verfügung zu stellen,
- wobei diese Erweiterung zur Durchführung dieses Verfahrens - des temporären Ab-/Aufbaus von logischen Verbindungen bzw. Assoziationen zwischen an diesem Kommunikationsvorgang beteiligten TK-Systemen - dient, und
- die durch die Anwendung dieses Verfahrens erzielbaren Kostenersparnisse und Geschwindigkeitssteigerungen in diesem Kommunikationsvorgang weiter gehen als bisher möglich.

### Zusammenfassung der Erfindung

Diese Aufgabe wird erfindungsgemäß durch ein Verfahren mit den Merkmalen des Anspruchs 1, eine Telekommunikationsanordnung mit den Merkmalen des Anspruchs 25 und ein TK-Endsystem mit den Merkmalen des Anspruch 31 gelöst. Bevorzugte und vorteilhafte Ausgestaltungen der Erfindung sind in den Unteransprüchen angegeben.

Danach zeichnet sich die erfindungsgemäße Lösung dadurch aus, dass mindestens eine in einem Kommunikationsvorgang zwischen den zwei TK-Systemen benutzte Verbindung, nämlich zumindest die logischen L1- bis L3-Verbindungen/-Assoziationen im Sinne des OSI-Referenzmodells, zur Datenübertragung über mindestens einem Datenübertragungsabschnitt nur dann komplettiert werden, wenn zwischen den TK-Systemen zu übertragende Daten aktuell vorliegen. Nach der Komplettierung der logischen L1- bis L3-Verbindungen/-Assoziationen werden die aktuell vorliegenden Daten übertragen. Es wird festgestellt, wann die Übertragung dieser Daten über den mindestens einen Datenübertragungsabschnitt beendet ist, und ansetzend an das Ende der Datenübertragung sofort oder innerhalb einer sehr kurzen Zeitspanne ein Abbau der zuvor komplettierten logischen L1- bis L3-Verbindungen/-Assoziationen über diesen mindestens einen Datenübertragungsabschnitt veranlasst, ohne dass eine L7-Verbindung zwischen den TK-Systemen oder zwischen einem der TK-Systeme und einem weiteren TK-System von einem solchen Abbau tangiert wird.

Insbesondere wird nach dem Ende der Datenübertragung ein Steuerbefehl bzw. ein Signal zum Abbau der logischen L1- bis L3-Verbindungen/-Assoziationen erzeugt.

Es werden also in einem Kommunikationsvorgang zwischen TK-Systemen benutzte Verbindungen, genauer: ihre L1- bis L3-Verbindungen/-Assoziationen und/oder deren weiter oben erwähnten Untergliederungen, zur Datenübertragung nur dann komplettiert werden, wenn zwischen ihnen zu übertragende Daten dies unaufschieblich machen. Nach dem Übertragen dieser Daten zwischen zwei TK-Systemen werden die dafür benutzten L1- bis L3-Verbindungen/-Assoziationen sofort oder innerhalb einer sehr kurzen Zeitspanne wieder soweit gehend und derart abgebaut, dass ihre nicht abgebauten Teile weder Kosten oder anderweitige Belastungen (wie z.B. Energieverbrauch), die möglichst vermieden werden sollten, verursachen noch von dem teilweisen Abbau irgendwelche Kenntnis zu erhalten brauchen. Das Ende einer aktuellen Datenübertragung stellt dabei erfindungsgemäß den Triggerpunkt für diesen teilweisen Verbindungs-/Assoziationsabbau dar.

Der Begriff "L1- bis L3-Verbindung/-Assoziation" ist dahingehend zu verstehen, dass er für eine L1 bis L3-Verbindung oder eine L1- bis L3-Assoziation steht.

Unter "Komplettieren einer L1- bis L3-Verbindung/-Assoziation" ist zu verstehen, dass die ihr zugehörigen L1- bis L3-Einheiten in den beteiligten Systemen (z.B. durch Aussenden von Signalisierungsbefehlen) derart vervollständigt werden, dass alle drei (d.h. die beteiligten L1- bis L3-Einheiten und die L1- bis L3-Verbindung/Assoziation) gemeinsam zur Datenübertragung auf der logischen Schicht 1, 2 bzw. 3 nutzbar sind.

Das erfindungsgemäße Verfahren ermöglicht es einem Kommunikationsvorgang, eine von ihm benötigte komplette Verbindung/Assoziation nicht mehrere Zeitscheiben - von einem inactivity timer vorgegeben, beispielsweise je mehrere Sekunden - aufrecht halten zu müssen. Sie stellt ihm eine komplette Verbindung/Assoziation vielmehr nur in den Momenten zur Verfügung, in denen ein Datenaustausch tatsächlich erfolgen muss. Die komplette Verbindung wird gewissermaßen nur für die Zeitdauer eines "Kommunikations-Pulses" - oder "Koppel-Pulses" - bereitgestellt. U.a. kann die Erfindung dadurch die Anzahl der kleinsten Abrechnungseinheiten minimieren, die der Nutzer an den Netzdienst-Provider für die Nutzung seiner TK-Leitung zahlen muss.

Die Erfindung ist besonders bevorzugt im Internet-Kontext auf der Verbindung zwischen einem Internet-TK-Endsystem und dem Gateway-Computer eines Internet Services Providers (ISPs) einsetzbar und reduziert erheblich die Gebühren, die ein Internet-Benutzer für die Telekommunikationsanschlussleitung (TAL) des POTS oder ISDN an das Intemet-Paketvermittlungsnetz während einer Internet-Sitzung bezahlen muss - weil er diese nämlich nur während der kurzen Zeitintervalle der Koppel-Pulse benötigt.

In einer bevorzugten Ausgestaltung stellt ein Algorithmus automatisch fest, wann eine Übertragung aktuell vorliegender Daten abgeschlossen ist, und wird nach dieser Feststellung sofort oder innerhalb einer sehr kurzen Zeitspanne ein Steuerbefehl zum Abbau der logischen L1- bis L3-Verbindungen /-Assoziationen erzeugt. Beispielsweise erzeugt der Algorithmus, sobald er festgestellt hat, dass keine Daten mehr übertragen werden, ein Byte mit einem bestimmten Bitmuster oder eine bestimmte Byte-Folge. Sobald eine zugehörige Steuereinheit dieses Bitmuster oder diese Byte-Folge erkennt, erzeugt sie Signalisierungsbefehle zum Abbau der betrachteten L1- bis L3-Verbindung.

Es ist bevorzugt vorgesehen, dass die kurze Zeitspanne, innerhalb derer der Verbindungsabbau nach dem Ende der Datenübertragung veranlasst wird, innerhalb eines Zeitraums von maximal einer Sekunde, besonders bevorzugt innerhalb eines Zeitraums von maximal einer Zehntel Sekunde liegt. In der bevorzugtesten Ausgestaltung erfolgt der Verbindungsabbau jedoch "sofort", d.h. innerhalb der Reaktionszeit der involvierten Software und Prozessoren allein des abbauenden TK-Systems. Sobald die involvierte Software und/oder Hardware erkennt bzw. feststellt, dass eine Datenübertragung beendet ist, wird der teilweisen Abbau der logischen Verbindungen/Assoziationen entsprechend einer dieser Ausgestaltungen vorgenommen.

Die Zeitdauer, bis dieser teilweise Verbindungs-/Assoziationsabbau nach dem Ende der Datenübertragung dann tatsächlich abgeschlossen und nicht mehr kostenpflichtig ist, hängt von der TK-Technik ab, mittels derer die abzubauenden logischen Verbindungen/Assoziationen realisiert wurden. Geht es z.B. um den Abbau einer physikalischen Verbindung, so erfordert die dabei involvierte TK-Technik beim ISDN weniger als 0,25 Sekunden, beim PSTN in Mittel-Europa heute i.d.R. auch nicht viel länger.

Bevorzugt wird der teilweise Abbau der Verbindung nach dem Ende der Datenübertragung innerhalb einer derart kurzen Zeitspanne veranlasst, dass das Ende der Gebührenpflicht noch in den aktuellen Gebührentakt fällt. Für die Zeit nach dem Ende der Datenübertragung sind somit keine zusätzlichen Verbindungsgebühren an den Netzbetreiber zu entrichten.

Dabei ist bevorzugt eine Steuerung vorgesehen, dass eine Datenübertragung nicht derart kurz vor Ablauf eines Gebührentaktes endet, dass bis zum erfolgten Abbau der Verbindung und Ende der Gebührenpflicht der nächste Gebührentakt bereits begonnen hat. Ohne eine solche Steuerung erfolgt der Abbau der Verbindung zumindest innerhalb des folgenden Gebührentaktes.

In einer weiteren bevorzugten Ausgestaltung ist vorgesehen, dass zu übertragende Daten bei dem sendenden TK-System gesammelt werden und erst bei Erreichen eines bestimmten Datenvolumens oder bei Vorliegen eines anderen definierten Ereignisses eine Komplettierung der TK-Verbindung durch Verbindungsaufbau der aktuell fehlenden logischen Verbindungen, etwa der physikalischen Verbindung, erfolgt Dabei weist das Datenvolumen bevorzugt eine maximale Größe derart auf, dass die Übertragung der Daten innerhalb eines Zeitintervalls erfolgen kann, das synchron ist zu dem Gebührentakt oder einem Vielfachen des Gebührentaktes des Netzbetreibers, der den kostenpflichtigen Teil der TK-Verbindung bereitstellt. Hierbei handelt es sich beispielsweise und bevorzugt um den Takt von einer Sekunde oder weniger.

Das zu übertragende Datenvolumen weist dabei bevorzugt eine Größe derart auf, dass die Datenübertragung derart rechtzeitig innerhalb eines Gebührentakts oder eines Vielfachen des Gebührentaktes endet, dass auch der Verbindungsabbau bzw. das Ende der Gebührenpflicht innerhalb des betrachteten Taktes endet. Die Datenübertragung endet also so rechtzeitig, dass die Signalisierungsphase zum Verbindungsabbau ebenfalls in dem aktuellen Gebührentakt liegt, jedenfalls solange sie gebührenpflichtig ist. So wird sichergestellt, dass nach dem Ende der Datenübertragung keine weiteren Gebühren anfallen.

Ein Sammeln der Daten beim sendenden TK-System ermöglicht eine weitere Kostenreduktion durch optimale Ausnutzung der Gebührentakte des Netzbetreibers. Bei den gesammlten Daten handelt es sich beispielsweise um Bestätigungspakete einer TCP/IP Verbindung.

Es kann jedoch ebenfalls vorgesehen sein, dass für bestimmte priveligierte Daten eine Verbindungsaufbau sofort nach Vorliegen der Daten am sendenden TK-System vorgenommen wird, ohne dass gewartet wird, bis eine bestimmte Datenmenge vorliegt. Bevorzugt erfolgt dies jedoch nur bei bestimmten Daten bzw. Datenpaketen, die besonders eilige Informationen enthalten oder bei denen es sich beispielsweise um Signalisierungs- bzw. Steuerinformationen handelt.

Es kann weiterhin vorgesehen sein, dass die beiden kommunizierenden TK-Systeme transportzeitverkürzende Maßnahmen praktizieren, also etwa Datenkompression/dekompression betreiben oder intelligente "caching"- Mechanismen nutzen, die aber den optimalen Zeitpunkt eines Verbindungsaufbaus verzögern können oder gänzlich unnötig machen.

Das Ende einer Datenübertragung wird bevorzugt durch ein Überwachungssystem festgestellt, z.B. mittels einer Verifikationsroutine zur Prüfung ob noch Daten zur sofortigen Übertragung vorliegen, das ggf. sofort den Verbindungsabbau veranlasst.

Das TK-Endsystem ist bevorzugt im Endgerät eines Nutzers angesiedelt, etwa in seinem PC oder PDA. Ebenso kann es sich jedoch um einen Router eines lokalen Netzes handeln, der Daten einer Vielzahl von lokalen TK-Systemen des lokalen Netzes erhält und diese an das andere TK-Systeme überträgt.

Ein solcher teilweiser Verbindungsauf- oder -abbau kann durch das sendende und/oder das empfangende TK-System veranlaßt werden, wobei dieses ein TK-Endsystem sein kann oder ein TK-Netz-internes System. In einer bevorzugten Ausgestaltung wird das erfindungsgemäße Verfahren in einer Internet-Verbindung zwischen einem TK-Endsystem eines Internet-Benutzers und einem Intemet-Server - die über einen PPP-Gateway-Computer eines ISPs geführt wird - eingesetzt. Das TK-Endsystem des Internet-Benutzers ist mit dem PPP-Gateway-System über mindestens ein TK-Netz, etwa das ISDN, verbunden. Das PPP-Gateway-System stellt einen Zugangspunkt zu dem paketvermittelnden Internet des ISP bereit. An den Internet-Server zu übertragende Daten werden vom TK-Endsystem des Intemet-Benutzers zum PPP-Gateway-System und von diesem über das Paketvermittlungsnetz weiter an den Internet-Server übertragen.

Es ist nun erfindungsgemäß bevorzugt vorgesehen, dass in einem Kommunikationsvorgang der teilweise Abbau einer/einiger seiner logischen Verbindungen/Assoziationen die anderen, also davon nicht unmittelbar berührten, logischen Verbindungen/Assoziationen zwischen den - in diesem Kommunikationsvorgang - kommunizierenden TK-Systemen unberührt bleiben.

Dies kann speziell "im Internet-Kontext" erreicht werden, wenn die IP-Adresse des TK-Endsystems des Internet-Benutzers in einer Internet-Verbindung zwischen diesem TK-Endsystem und einem Internet-Server beim Abbau der physikalischen Verbindung (L1) zwischen diesem TK-Endsystem und seinem Internet-Einwahl-Punkt (POP = point of presence), häufig ein PPP-Gateway-System, und ihrer anschließenden Komplettierung unverändert bleibt, also die L3-Assoziation in dieser Intemet-Verbindung von diesem Ab/Aufbau nicht berührt wird. Bevorzugt wird dabei auch die L2-Verbindung zwischen dem TK-Endsystem und dem Internet-Einwahl-Punkt (Gateway-System) von diesem Ab/Aufbau nicht berührt.

Und dies erfordert die Erweiterung des TK-Netz-internen POP, z.B. PPP-Gateway-Systems - ebenso wie des mit ihm kommunizierenden TK-Endsystem des Intemet-Benutzers - um KPT-Funktionalität, so dass sie im Kontext dieser Anmeldung künftig gelegentlich als KPT/PPP-Gateway-System bzw. KPT/TK-Endsystem bezeichnet werden. Das Akronym PPP steht hier und in allen diesen Fällen als Beispiel für eine Vielzahl von anderen Protokollen mit vergleichbaren Funktionalitäten wie das point-topoint-Protokoll, etwa SLIP, HDLC, ....

Mit einer solchen KPT-Erweiterung wird ein Kommunikationsvorgang zwischen dem TK-Endsystem des Intemet-Benutzers und dem Internet-Server von dem kurzfristigen Auf- und Abbau von Teilen seiner logischen Verbindungen - bevorzugt: seiner physikalischen Verbindung - zwischen KPT/Endsystem und KPT/PPP-Gateway-System nicht tangiert. Dieser kurzfristig vollziehbare, teilweise Auf- und Abbau der Internet-Verbindung bleibt für den Internet-Benutzer praktisch unsichtbar (bis auf die geringeren Kosten).

In anderen Worten: Mit dieser KPT-Erweiterung in den beiden TK-Systemen in einer Internet-Verbindung bleibt die IP-Adresse des TK-Endsystems des Internet-Benutzers bei einem teilweisen Verbindungsab-/aufbau der physikalischen Verbindung gemäß der Koppel-Puls Technik beibehalten - auch wenn das TK-Endsystem nicht über eine ihm permanant zugeordnete IP-Adresse verfügt. Letzteres ist heute bei der großen Überzahl der TK-Endsysteme für Internet-Benutzer der Fall, während die meisten Internet-Server über permanent zugeordnete IP-Adressen verfügen.

Die Beibehaltung der IP-Adresse erspart in vorteilhafter Weise auch Verzögerungen, die bei einer neuen Zuordnung einer IP-Adresse nach dem Bereitstellen einer erneuten physikalischen Verbindung zwischen dem TK-Endsystem und dem Gateway-System entstehen können.

Die Beibehaltung der IP-Adresse hat des weiteren Vorteile hinsichtlich der Sicherheit der Datenübertragung bei sicherheitssensitiven Internetanwendungen. Beim üblichen Browsen im Internet ist der Wechsel der IP-Adresse in einer Internet-Sitzung i.A. kein Problem. Aber viele sicherheitssensitive Intemet-Anwendungen, wie etwa aus dem Bereich eBanking, bestehen aus Sicherheitsgründen unter anderem darauf, dass sich die IP-Adresse des Klienten in einer Sitzungen mit ihnen nicht ändert - womöglich die gleiche ist wie in früheren Sitzungen.

Eine erhöhte Sicherheit durch Beibehaltung der IP-Adresse besteht auch beim Verbindungsaufbau aus dem Internet heraus während einer Intemet-Sitzung. Die bekannte, eingangs erläuterte Short-Hold Technik bringt es mit sich, dass in einer Internet-Sitzung nach einem Verbindungsabbau ein nachfolgender Verbindungsaufbau-Wunsch aus dem Internet
- weder als von derjenigen Internet-Anwendung kommend erkannt werden kann, mit der der Internet-Benutzer vor dem Verbindungsabbau zusammengearbeitet hat,
- noch dass die nun zum Benutzer zu übermittelnden Daten genau die sind, die er auch erhalten hätte, wäre die Verbindung zu ihm zwischenzeitlich nicht abgebaut worden,
- es sei denn, die Internet-Anwendung hätte für den Fall eines solchen vorübergehenden Verbindungsabbaus besondere Maßnahmen getroffen, was i.d.R. jedoch nicht der Fall ist.

Als Folge des Risikos, dass deshalb ein feindlicher Angreifer diese weitreichende Unsicherheit ausnutzt, um sich Zugang zu dem PC des Internet-Benutzers zu verschaffen, schalten die meisten Internet-Benutzer vernünftigerweise auf ihrem PC von vornherein die Funktion ab, die Verbindungsaufbau-Wünsche aus dem Internet entgegennehmen und sie befolgen kann.

Als Folge dieser Schwäche der Short-Hold Technik muß der Startwert ihres eingangs erläuterten Inactivity Timers so groß gewählt werden, dass während einer Internet-Sitzung eines Internet-Benutzers alle von ihm von einer Internet-Anwendung angeforderten Daten in jedem Falle bereits bei ihm angekommen sind, bevor der Inactivity Timer in einer Inaktivitätsphase abläuft, weil sonst die eben benutzte Internet-Anwendung terminiert, ohne diese angeforderten Daten dem Benutzer zu übermitteln - was offensichtlich in den allermeisten Fällen nicht den Erwartungen des Internet-Benutzers entspräche und deshalb einen im Allgemeinen viel zu großen Startwert erfordert Die Kosten der Verbindung zum Gateway-System fallen deshalb beim Einsatz der Short-Hold Technik viel höher aus als beim Einsatz der vorliegenden Erfindung, der Koppel-Puls Technik.

Die Erweiterungen der TK-Systeme um KPT-Funktionalitäten werden häufig auf logischen Schichten realisiert, die unterhalb der IP-Protokoll-Schicht (L3) liegen.

Zu beachten ist auch, dass der Begriff "System" des OSI-Modells nicht notwendigerweise mittels eines einzelnen Computers implementiert ist, sondern mehrere irgendwie miteinander kommunizierende und kooperierende Computer umfassen kann und dabei von der Aufteilung der Funktionalitäten des in Frage stehenden Systems auf diese Computer abstrahiert. Der System-Begriff des OSI-Modells, wie er dieser Patentschrift zugrunde liegt, abstrahiert also von derartigen "lokalen Implementierungsgegebenheiten". Hier heißt dies: Die Implementierung des KPT/PPP-Gateway-Systems kann mehrere ganz unterschiedliche Computer umfassen - etwa einen mit den hier offenbarten KPT-Funktionalitäten und einen anderen mit ganz konventionellen PPP-Funtionalitäten.

Zu beachten ist in diesem Zusammenhang weiterhin, dass die KPT- und PPP-Funktionalitäten in beliebiger Weise auch TK-Netz-intern oder TK-Netz-extern angesiedelt sein können.

Eine ganz analoge Verteilung der Implementierung der Funktionalitäten auch des KPT/TK-Endsystems - zu der, wie sie hier gerade beim KPT/PPP-Gateway-System darlegt wurde - wurde übrigens weiter oben schon erörtert.

Es seien nun verschiedene lmplementierungsstrukturen des der Koppel-Puls Technik zugrunde liegenden Verfahrens in den dabei involvierten TK-Systemen betrachtet.

In einer Ausgestaltung weist das TK-Endsystem des Internet-Benutzers - zusätzlich zu seinem üblichen PPP-Modul (oder einem funktional vergleichbaren Modul) - ein dazu inverses PPP-Modul (oder ein funktional vergleichbares inverses Modul) auf. Das inverse PPP-Modul nimmt dem üblichen PPP-Modul immer von ihm abgesandten Daten ab. Dies bewirkt, dass der übliche PPP-Modul dem über ihm liegenden IP-Modul immer ein protokollgemäßes Weiterreichen der von letzterem abgesandten Daten anzeigen kann, so dass dieser IP-Modul annimmt, eine PPP-Verbindung zum PPP-Gateway sei stets vorhanden. In weiteren, unter dem inversen PPP-Modul liegenden Schichten erfolgt dann erst - hier durch das TK-Endsystem - der Verbindungsauf-/abbau auf der L1 zum PPP-Gateway, wobei zur Abschnittssicherung (L2) ein weiteres KPT/PPP-Modul eingesetzt werden muß.

Alternativ wird im TK-Endsystem des Intemet-Benutzers eine Ethernet-Schnittstelle emuliert, über die die IP-paketierten Daten zwischen seinem PPP-Modul und seinem L1-Modul ausgetauscht werden, wobei letzterer dem PPP-Modul alle von ihm abgesandten Daten 1.d.R. abnimmt.

In beiden Fällen erfolgt der L1-Verbindungsauf-/abbau zum PPP-Gateway unterhalb der L2, also nur auf L1 - die logische KPT/PPP-Abschnittssicherungs-Verbindung auf L2 sieht nichts davon.

Bevorzugt werden im TK-Endsystem die zu übertragenden Pakete, z.B. TCP/UDP-Pakete, der Transportschicht (L4) auf der Netzwerkschicht (L3) in IP-Pakete eingekapselt und diese auf der Abschnittssicherungsschicht (L2) in PPP-Pakete eingekapselt.

In der ersteren der beiden obigen Alternativen wird die letztere Verkapselungen durch den inversen PPP-Modul auf dem TK-Endsystem wieder entfernt und vom KPT/PPP-Modul auf dem TK-Endsystem durch eine neuerliche PPP-Verkapselung ersetzt. Die hierzu gehörige Entkapselung des eingeschlossenen IP-Paketes erfolgt in dem PPP-Modul des empfangenden KPT/PPP-Gateways. In der zweiten der beiden obigen Alternativen entfällt auf dem TK-Endsystem die "vertikale PPP-Verbindung". Die KPT-Erweiterung des PPP-Gateways ist in beiden Implementierungs-Altemativen identisch - sie kann die beiden KPT-Varianten auf den TK-Endsystemen nicht unterscheiden.

In einer weiteren Alternative können die Daten von einer Ethernet-Schnittstelle auch an ein HDLC-Modul (oder ein anderes funktional vergleichbares Datenübertragungsabschnitt-Sicherungs-Protokoll) gegeben werden, das die Daten über ein HDLC-Framing an ein Gateway versendet. Ein PPP-Modul ist dann nicht vorgesehen.

Die Verkapselung der TCP/UDP-Pakete in IP-Pakete im TK-Endgerät und die Entkapselungen der TCP/UDP-Pakete aus den empfangenen IP-Pakete im KPT/PPP-Gateway wird von diesem - u.U. nur teilweisen - Verbindungsauf-/abbau auf L1 zwischen TK-Endsystem und TK-Netz-intemem PPP-Gateway jedenfalls nicht tangiert.

In einer bevorzugten Ausgestaltung der vorliegenden Erfindung ist das TK-Endgerät des Internet-Benutzers über eine ISDN-Schnittstelle an das TK-Netz angeschlossen. Die ISDN-Schnittstelle weist in bekannter Weise einen D-Steuerkanal und mindestens zwei B-Datenkanäle auf. Die physikalische Verbindung zwischen dem TK-Endgerät und dem PPP-Gateway im Paketvermittlungsnetz wird über mindestens einen B-Datenkanal bereitgestellt, der je nach Datenaufkommen auf- und abgebaut wird. Der Signalisierungskanal wird dagegen bevorzugt fortlaufend aufrechterhalten. Da der Signalisierungskanal aufrechterhalten wird, kann der Aufbau eines oder mehrerer B-Kanäle sehr schnell, insbesondere innerhalb einer Sekunde oder einem Zeitraum kürzer als eine Sekunde erfolgen. Insgesamt wird somit extrem schnell ein Abbau und Wiederaufbau von Datenkanälen ermöglicht, so dass eine maximale Kostenersparnis vorliegt.

In einer bevorzugten Ausgestaltung der Erfindung werden die Daten vom KPT/TK-Endsystem zum KPT/PPP-Gateway im Paketvermittlungsnetz des ISP über ein erstes und mindestens ein zweites TK-Netz übertragen, die über einen sogenannten Interconnect-Anschluss (ICA) zusammengeschaltet sind. Eine Zusammenschaltung bzw. ein derartiges Interconnect erfolgt meistens zwischen einem TK-Netz des ehemaligen Monopolisten, in Deutschland der Deutsche Telekom AG (DTAG), und weiteren Anbietern von TK-Netz-Dienstleistungen, wie etwa ISPs. Die Zusammenschaltung der Netze erfolgt über Interconnect-Anschlüsse, bei denen es sich im Wesentlichen um 2-Mbit/s-Leitungen handelt, die die Netze mittels jeweils rund 30 transparenter 64 Kbit/s-Datenkanäle verbinden. Je nach Belegungsdauer eines Datenkanals seines ICAs - hier für eine L1/L2-Verbindung des TK-Endsystems mit dem PPP-Gateway-System - muß der darüber zusammengeschaltete TK-Netz-Dienste-Anbieter bzw. ISP (mit dem PPP-Gateway) an die DTAG eine bestimmte Gebühr für die Zusammenschaltungsleistung entrichten (Interconnect-Gebühr).

In anderen Worten: Daten vom KPT/TK-Endsystem werden zunächst über das erste TK-Netz - das den Ortsverkehr abwickelt und meistens der DTAG gehört - und einen ICA an das KPT/PPP-Gateway-System des ISP übertragen. Der ISP hat daher an den Betreiber des ersten TK-Netzes, also in der Regel die DTAG, eine Interconnect-Gebühr für die Internet-Verbindungszuführung zu zahlen. Die Interconnect-Gebühr wird im Sekundentakt erhoben. Die Erfindung ermöglicht nun aufgrund der zeitweisen Unterbrechung der L1- bis L3-Verbindung zwischen dem KPT/TK-Endsystem des Internet-Benutzers und dem KPT/PPP-Gateway-Systems des ISP, diese Interconnect-Gebühr zu reduzieren. Sofern diese physikalische Verbindung unterbrochen ist - und dementsprechend keine Daten des TK-Endsystems an das TK-Netz des ISP weitergeleitet werden können, müssen naturgemäß auch keine Interconnect-Gebühren entrichtet werden. Eine Kostenersparnis ergibt sich dabei i.d.R. für den Fall, dass der Inhaber des ersten TK-Netzes die Interconnect-Gebühren zeitabhängig erhebt, wie es üblicherweise der Fall ist (Abrechnung im Sekundentakt).

Für die Übertragung von Daten in umgekehrte Richtung, also vom Internet-Server bzw. vom KPT/PPP-Gateway zum KPTITK-Endsystem des Internet-Benutzers, und die dabei u.U. entstehenden Interconnect-Gebühren - bzw. deren Minderung durch den Einsatz der Koppel-Puls Technik auf den Datenübertragungsabschnitten zwischen KPT/PPP-Gateway und KPT/TK-Endsystem - gilt sinngemäß das gleiche.

Ein Kommunikationsvorgang zwischen dem TK-Endsystem eines TK-Dienste-Benutzers und einem TK-Server dient in der Regel dazu, von diesem Informationen - die er bereits enthält oder von einem anderen Computer beschaffen kann - auf das TK-Endsystem zu holen. Hinsichtlich dieser Downstream-Daten sind zwei Übertragungsalternativen vorgesehen.

In einer ersten Alternative werden die Downstream-Daten von einem TK-Server zunächst über ein Paketvermittlungsnetz und dann über mindestens ein weiteres TK-Netz an das TK-Endsystem übertragen. Sie können dabei im Wesentlichen den gleichen Rückweg wie auf dem Hinweg ("Upstream") nehmen, wobei der genaue Weg der einzelnen

Datenpakete im Bereich von Paketverrnittlungsnetzen natürlich nicht genauer bestimmbar ist. Die physikalische Verbindung zwischen dem TK-Endsystem und dem Gateway-System wird benutzertransparent i.d.R. dann unterbrochen, wenn in keiner Übertragungsrichtung Daten zur Übertragung anliegen und bei Bedarf kurzfristig wieder aufgebaut.

In einer zweiten Alternative werden die downstream-Daten über mindestens ein weiteres - zu den TK-Netzen der vorigen Alternative zusätzliches - und i.d.R. breitbandiges TK-Netz von dem Internet-Server an das TK-Endsystem des Internet-Benutzers übertragen. Sie brauchen dabei auch nicht notwendigerweise über das PPP-Gateway transportiert zu werden. Eine physikalische Verbindung zwischen dem TK-Endsystem und dem PPP-Gateway wird dabei also nur für upstream-Informationstransporte benötigt - und dementsprechend ab-/wiederaufgebaut. Für den downstream-Datentransport an das TK-Endsytem werden ausschließlich oder primär das oder die weiteren Netze benutzt. Aufbau bzw. Komplettierung dieser physikalischen Verbindung erfolgt dabei also nur für upstream-Daten, nicht dagegen für downstream-Daten. Da "upstream", dass heißt in Richtung des Internet-Servers, relativ selten und nur kleine Datenpakete ausgesandt werden müssen (es handelt sich dabei i.d.R. um verzöger- und deshalb pufferbare Bestätigungspakete ohne Auswirkungen auf die downstream-Bedienungsgeschwindigkeit, gelegentlich um nicht verzögerbare Benutzereingaben), kann durch das erfindungsgemäße Verfahren eine erhebliche Kostenreduzierung erreicht werden.

In einer weiteren Alternative ist vorgesehen, dass die downstream-Daten teilweise über ein weiteres breitbandige TK-Netz und teilweise über das übliche Internet an das TK-Endsystem übertragen werden. Die zu übertragenden Daten werden somit aufgeteilt in Daten, die über die breitbandige Verbindung und über das teilweise schmalbandige Internet mit seinem Zugangsnetz an das TK-Endsystem übertragen werden.

Bei breitbandigen TK-Netzen handelt es sich bevorzugt um Satelliten- oder um TV-Kabel- oder um WLAN-gestützte Netze. Die downstream-Daten können dabei von einem Anwendungs-Internet-Server breitbandig - u.U. über das Internet-"back bone"-Netz - zu einem Satelliten-/TV-Kabel-/WLAN-Server und von diesem per Satelliten bzw. TV-Kabel bzw. WLAN zum TK-Endsystem übertragen werden. Ein derartiges Verfahren ist in der EP 0 998 093 A2 beschrieben, auf die insofern verwiesen wird.

Während in der bisherigen Darstellung der Erfindung beim benutzertransparenten "teilweisen Ab/Aufbau von logischen Verbindungen bzw. Assoziationen" in einem Kommunikationsvorgang primär dessen unterste logische Verbindungen/Assoziationen adressiert wurden, primär deren physikalische Verbindungen, ist sie doch keinesfalls darauf beschränkt. Sie erstreckt sich durchaus auch auf den benutzertransparenten "teilweisen Ab/Aufbau von logischen Verbindungen bzw. Assoziationen" in einem Kommunikationsvorgang dessen einzelner oder mehrerer oberer logischer Verbindungen/Assoziationen. Diese letztgenannten Situationen ergeben sich vor allem in TK-Szenarien, in denen das permanente Bestehenbleiben von niedrigen logischen Verbindungen/Assoziationen praktisch keine Kosten oder anderweitigen Belastungen verursacht, diese vielmehr durch das Zustandekommen bzw. die Dauer des Bestehens von Verbindungen/Assoziationen auf den höheren Schichten von Kommunikationsvorgängen entstehen. Und natürlich gibt es auch TK-Szenarien, in denen Kosten und/oder anderweitige Belastungen am besten vermieden werden durch den benutzertransparenten "teilweisen Ab/Aufbau von logischen Verbindungen bzw. Assoziationen" in einem Kommunikationsvorgang dessen einzelner oder mehrerer unterer und einzelner oder mehrerer oberer logischer Verbindungen/Assoziationen.

Die vorliegende Erfindung sieht eine Benutzertransparenz des Auf- und Abbaus logischer L1- bis L3-Verbindungen/Assoziationen mittels Emulation des permanenten Bestehens seiner kompletten logischen Verbindungen bzw. Assoziationen vor.

Die Erfindung betrifft auch eine Telekommikationsanordnung mit den Merkmalen des Anspruchs 25 und ein TK-Endsystem mit der Merkmalen des Anspruchs 31. Die dort genannten Mittel zum Verbindungsaufbau, Mittel zum Übertragen der aktuell vorliegenden Daten, Mittel zum Feststellen und Mittel zum Verbindungsabbau sind dabei in dem ersten und/oder dem zweiten TK-System angeordnet. Die entsprechenden Mittel sind bevorzugt als Software-Moduln ausgebildet, die in Verbindung mit einem Steuerprozessor und üblicher Hardware wie RAM/ROM des jeweiligen TK-Systems ausgeführt wird. Insbesondere sind bevorzugt Moduln vorgesehen, die bewirken, dass ein Ab-/Aufbau der physikalischen Verbindung zwischen den TK-Systemen vor darüberliegenden logischen Verbindungen verborgen bleibt.

### Beschreibung mehrerer bevorzugter Ausführungsbeispiele

Die Erfindung wird nachfolgend anhand mehrerer Ausführungsbeispiele unter Bezugnahme auf die Figuren 1-4 näher erläutert.
- Fig. 1: zeigt eine Telekommunikationsanordnung mit einem TK-Endsystem, dessen physikalische Verbindung in einem einzigen TK-Netz zu einem Internet-Gateway eines ISPs in Abhängigkeit vom Datenverkehr benutzertransparent unterbrochen und wiederhergestellt werden kann.
- Fig. 2: zeigt eine Telekommunikationsanordnung mit einem TK-Endsystem, dessen physikalische Verbindung in zwei "per Interconnectanschlüsse" verbundenen TK-Netzen zu einem Internet-Gateway eines ISPs in Abhängigkeit vom Datenverkehr benutzertransparent unterbrochen und wiederhergestellt werden kann.
- Fig. 3: zeigt eine strukturelle Darstellung der KPT-Funktionalitäten in einer ersten Implementierungsvariante sowohl beim KPT/TK-Endsystem, als auch beim KPT/PPP-Gateway und schließlich beim Internet-Server der Figuren 1 und 2.
- Fig. 4: zeigt eine strukturelle Darstellung der KPT-Funktionalitäten in einer zweiten lmplementierungsvariante sowohl beim KPT/TK-Endsystem, als auch beim KPT/PPP-Gateway und schließlich beim Internet-Server der Figuren 1 und 2.
- Fig. 5: zeigt eine strukturelle Darstellung der KPT-Funktionalitäten in einer dritten Implementierungsvariante sowohl beim KPT/TK-Endsystem, als auch beim KPT/PPP-Gateway und schließlich beim Internet-Server der Figuren 1 und 2.

Zunächst wird folgendes angemerkt. Eine physikalische Verbindung im Sinne der vorliegenden Erfindung und der folgenden Beschreibung ist eine logische Verbindung der Schichten 1 des OSI-Referenzmodells (OSI = Open System Interconnection) der "International Organization for Standardization". Sie ist die unterste von bis zu 7 übereinanderliegenden, vom technischen Informations-Transport abstrahierenden, "logischen" Schichten des OSI-Referenzmodells. Eine teilweise Unterbrechung einer kompletten Internet-Verbindung/-Assoziation (die i.d.R. auch eine logische Verbindung auf der Schicht 7 umfaßt) in einer ihrer logischen, speziell der physikalischen, Verbindungen bedeutet nicht notwendigerweise, dass die entsprechende logische Schicht, speziell das physikalische Medium (auf der Schicht 0 angesiedelt), für den Datentransport in dieser Internet-Verbindung irgendwo unterbrochen wäre/würde. Es bedeutet im Rahmen dieses Patents vielmehr, dass diese Internet-Verbindung auf ihrer entsprechenden logischen logischen Schichten, speziell ihrer untersten, soweitgehend abgebaut bzw. unterbrochen wird/ist, dass während der Unterbrechungszeit keine TK-Kosten entstehen..

Eine Internet-Verbindung/Assoziation im Sinne der vorliegenden Erfindung und der folgenden Beschreibung besteht also aus logischen Verbindungen/Assoziationen auf den Schichten 1 bis 7 des OSI-Referenzmodells. Insbesondere wird hier eine TCP/IP-Verbindung (strukturell richtiger: Schichten-4-Verbindung/Schicht-3-Assoziation) zwischen zwei TK-Endsytemen ebenfalls als eine logische Verbindung bezeichnet und auch eine UDP/IP-Assoziation (Schichten-4-Assoziatio/Schicht-3-Assoziation) zwischen zwei TK-Endsystemen als eine logische Assoziation. Es werden hier aber vor allem PPP-Verbindungen (Schicht-2-Verbindungen) zwischen einem TK-Endsystem und einem TK-Netz-internen Gateway-System als logische Verbindungen diskutiert werden, da diese für das Verständnis der Koppel-Puls Technik derzeit im Vordergrund stehen.

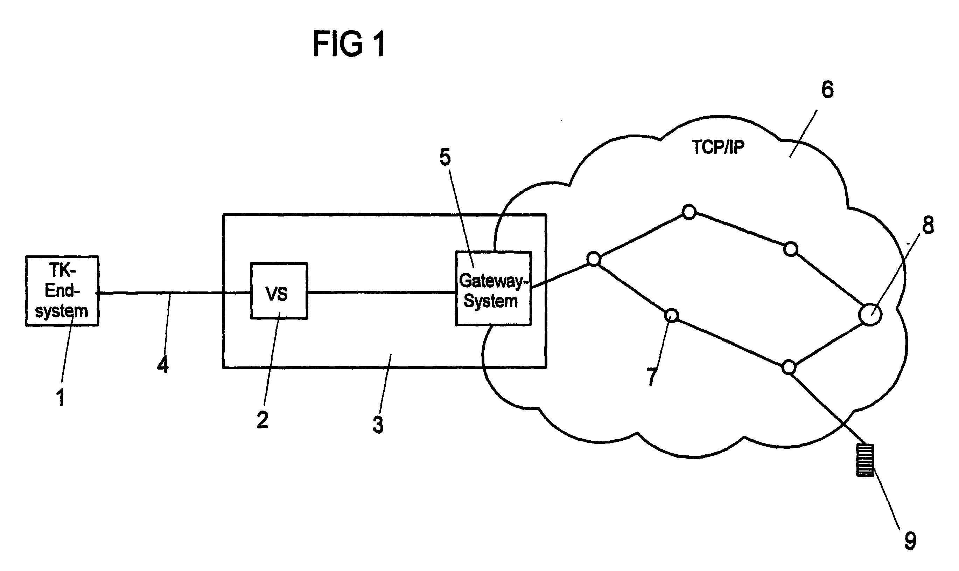

### Erläuterung der Figur 1

In dem Ausführungsbeispiel der Fig. 1 ist ein TK-Endsystem 1 an eine Vermittlungsstelle (VSt) 2 eines TK-Netzes 3, beispielsweise des TK-Netzes der DTAG, über eine Teilnehmeranchlussleitung (TAL) 4 angeschlossen. Bei dem TK-Endsystem 1 kann es sich insbesondere um einen Personal Computer (PC) und dessen Anwendungssysteme eines Internet-Benutzers handeln, von denen mindestens eines mittels des TK-Netzes 3 mit der Vermittlungsstelle 2 verbunden ist. Ebenso kann es sich bei dem TK-Endsystem 1 um einen Router eines lokalen Netzes handeln, an den mehrere weitere Computer und ihre Anwendungssysteme angeschlossen sind. Der Router multiplext dann die Daten der Internet-Sitzungen an den einzelnen Computern auf seinem Anschluß an das TK-Netz.

Die TAL 4 zwischen dem TK-Endsystem 1 und der VSt 2 ist beispielsweise eine POTS/ISDN Verbindung. POTS steht dabei für "Plain Old Telephonie System", das herkömmliche Telefonnetz. ISDN steht für "Integrated Services Digital Network", das standardisierte Dienste integrierende digitale Netz. Die TAL 4 kann jedoch ebenso eine GSM-Verbindung oder eine andere Verbindung sein, die eine Übertragung von Daten zwischen dem TK-Endsystem 1 und der Vermittungsstelle 2 bzw. einem Gateway-System 5 erlaubt.

Das TK-Netz 3 ist über ein Gateway-System 5 mit einem Paketvermittlungsnetz 6 verbunden, bei dem es sich bevorzugt um das Internet handelt, in dem Daten unter anderem nach den Protokollen IP und TCP bzw. UDP (angesiedelt auf den OSI-Schichten 3 und 4) übertragen werden. Das Gateway-System 5 stellt für das TK-Netz 3 einen Einwählpunkt POP (POP = Point of Presence) in das und einen Zugang zu dem Paketvermittlungsnetz 6 zur Verfügung. Im paketvermittelte Netz sind eine Vielzahl von Routern 7 angeordnet, zwischen denen in IP-Paketen verpackte Daten in an sich bekannter Weise paketvermittelt übertragen werden.

Die Vermittlungsstelle 2 in Fig. 1 ist optional. Ist sie nicht vorhanden, dann verbindet die TAL 4 das TK-Endsystem 1 direkt mit dem Gateway 5 - an dem vorliegenden Szenario wird hinsichtlich der Koppel-Puls Technik dadurch nichts verändert.

Es sei nun der Fall betrachtet, dass zwischen dem TK-Endsystem 1 am TK-Netz 3 und einem Internet-Server 8 am TK-Netz 6 eine Internet-Verbindung/Assoziation aufgebaut wird. Diese kann etwa dazu dienen, Daten vom Intemet-Server 8 zum TK-Endsystem 1 herunterzuladen. Der Internet-Server 8 kann dabei ein Proxy-Server sein, der Daten von einem weiteren Anwendungsserver 9 erhält.

Zum Herunterladen von Daten vom Internet-Server 8 an das TK-Endsystem 1 ist zwischen ihnen eine TCP/IP-Verbindung, eine ähnliche logische Verbindung oder eine andere "Assoziierung" erforderlich, die diese Datenübertragung zwischen ihnen ermöglicht. Im folgenden wird meistens von einer TCP/IP-Verbindung gesprochen und diese beschrieben. Die Ausführungen gelten aber in gleicher oder entsprechender Weise für eine andere logische Verbindung oder Assoziierung.

Der Verbindungsaufbau erfolgt derart, dass das TK-Endsystem 1 auf der TAL 4 (ggf. über die Vermittlungsstelle 2) dem Gateway 5 zunächst mitteilt, dass es eine IP-Assoziation im Paketvermittlungsnetz 6 wünscht. Diese physikalische Verbindung zum Gateway 5 wird dabei i.d.R. mit einem Abschnittssicherungs-Protokoll, z.B. mit dem an sich bekannten PPP (Point to Point)-Protokoll, ausgestattet. Dabei kann dem IP-Modul im TK-Endsystem 1 vom PPP-Modul im Gateway 5 über den PPP-Modul im TK-Endsystem 1 eine IP-Adresse gemäß Internet-interner Protokolle zugeordnet werden - falls er diese IP-Adresse nicht schon hat.

Es liegt nun eine - weiter unten noch detaillierter diskutierte - PPP-Verbindung zum Gateway 5 vor, die es dem TK-Endsystem 1 ermöglicht, mittels seiner IP-Adresse logische Verbindungen zu den Computern 8 und/oder 9 an dem Paketvermittlungsnetz 6 aufzubauen. Will der Internet-Benutzer beispielsweise von dem Server 8 nur einfach Daten herunterladen, so kann er zu diesem Zweck etwa eine TCP/IP Verbindung zwischen dem TK-Endsystem 1 und dem Server 8 aufbauen und auf ihr per FTP (File Transfer Protocol, auf Schicht 7 angesiedelt) diese Daten abholen. Die so entstandene Internet-Verbindung umfaßt, wie erläutert, mehrere "über einander liegende" logische Verbindungen im Sinne des OSI-Referenzmodells und dieser Erfindung. Will der Internet-Benutzer, in einem anderen Beispiel, den Internet-Server 8 mittels seines www-Browsers auf seinem PC 1 ansprechen, so muß er zu diesem Zweck eine TCP/IP Verbindung zwischen seinem TK-Endsystem 1 und dem Intemet-Server 8 aufbauen und auf ihr das http (hyper text transfer protocol, auf Schicht 7 angesiedelt) starten. Diese Intemet-Verbindung ist ebenfalls, wie erläutert, aus mehreren logische Verbindung zusammengesetzt. Logische Verbindungen(Assoziationen) allein sind noch keine Internet-Verbindung im Sinne dieser Erfindung: Etwa eine TCP/IP-Verbindung - die nur auf den Schichten 3 und 4 angesiedelt ist - kennt noch keine Schichten 5, 6 und 7. Die Komplettierung einer TCP/IP-Verbindung zu einer Internet-Verbindung/-Assoziation muß i.d.R. erst in ihrer aktuellen Benutzung in einem Datenaustausch vorgenommen werden.

Vom TK-Endsystem 1 an den Internet-Server 8 zu übertragende Daten werden im TK-Endsystem 1 - nachdem sie dort zunächst entsprechend den Protokollen der höheren Schichten paketiert wurden - schließlich als IP-Pakete paketiert, nochmals in ein weiteres Paket entsprechend dem PPP-Protokoll eingekapselt und dieses tief geschachtelte Paket wird über Schicht-1-Verbindungen TAL 4 zum Gateway 5 übertragen. Im Gateway 5 werden die empfangenen und in PPP-Paketen eingekapselten IP-Pakete "aus ihrer PPP-Umhüllung" ausgepackt und auf das Paketvermittlungsnetz 6 gegeben, wo sie paketvermittelt an die IP-Adresse des Intemet-Servers 8 befördert werden. In der umgekehrten Richtung werden im Gateway 5 die über das Paketvermittlungsnetz 6 vom Internet-Server 8 empfangenen IP-Pakete entsprechend dem PPP-Protokoll in Pakete eingepackt und (ggf. über über die VSt 2 und) über die TAL 4 zum TK-Endsystem 1 übersandt

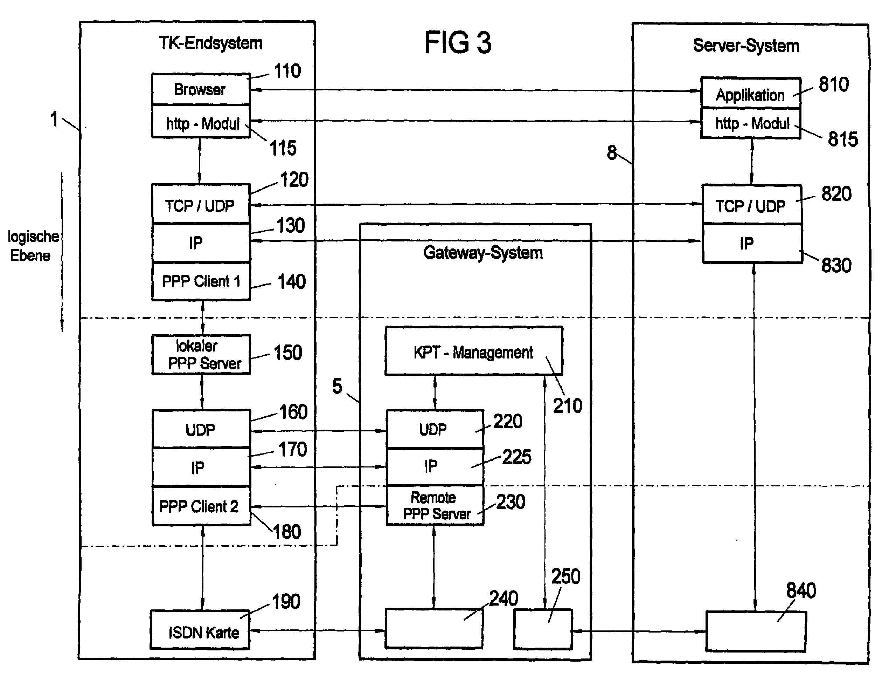

### Erläuterung der Figur 3

Dieser im vorigen Absatz beschriebene Gesamtzusammenhang ist in der Figur 3 näher dargestellt. Ihre beiden horizontalen Strich-Punkt-Linien schließen die für das hier beschriebene KPT-Verfahren spezifischen Teile auf dem KPT/TK-Endsystem 1, auf dem KPT/PPP-Gateway 5 und dem Intemet-Server 8 ein - sie trennen also die Internet-Standard-üblichen Teile auf den drei Systemen von den KPT-spezifischen Teilen.

Zunächst fällt auf, dass der Internet-Server 8 keinerlei KPT-spezifischen Teile aufweist, also vom Einsatz der Koppel-Puls Technik absolut unberührt bleibt

Auf dem TK-Endsystem 1 ist ein üblicher Intemet-Browser 110 installiert. Dieser benutzt ein http(hypertext transport protocol)-Modul 115. Anstelle von Browser- und http-Modul könnte auf dem TK-Endsystem 1 auch ein anderes Intemet-Anwendungssystem installiert sein, etwa eine Dateitransfer-Anwendung und das für solche Dateitransfers üblicherweise benutzte FTP(File Transfer Protocol)-Protokoll. Im Rahmen der OSI-/Internet-Protokoll-Welt bilden diese Moduln 110 und 115 (einen Teil) ihrer obersten Schicht, der Anwendungsschicht (Application Layer, L7). Die OSI-Schichten 6 und 5 bleiben bei der Internet-Netztechnik unbenutzt, d.h. es gibt auf diesen beiden Schichten keine Intemet-Protokolle - das OSI-Referenzmodell lässt dies durchaus zu. Darunter befindet sich der Transportschicht-Modul 120 (Transport Layer, L4), in dem im Internet meistens das Protokoll TCP für verbindungsorientierte Verbindungen oder das Protokoll UDP für verbindungslose Assoziationen implementiert ist.

Der darunterliegende Modul 130 repräsentiert die Netzwerkschicht (L3). Das wichtigste Protokoll dieser Schicht im Internet-Kontext ist das Internet Protokoll (IP). Es regelt den Versand von IP-Paketen als Datagramme" entweder in TCP-Verbindungen oder in verbindungslos in UDP-Assoziationen, jedenfalls von einem TK-Endsystem zu einem oder mehreren anderen. Das IP-Protokoll ist jedenfalls das unterste Internet-Protokoll mit "end(system)-to-end(system)"-Signifikanz, also das unterste Protokoll zwischen TK-Endsystemen.

Für den Austausch von IP-Paketen zwischen dem TK-Endsystem 1 und dem TK-Netzinternen Gateway-Computer 5 wird mittels des Moduls 140 der Abschnittssicherungsschicht (Data Link Layer, L2) - und des Moduls 190 bei Abwesenheit der KPT-Moduln - ein gesicherter logischen Datenübertragungsabschnitt implementiert. Zu diesem Zweck benutzt das Modul 140 im vorliegenden Ausführungsbeispiel das "point to point protocol (PPP)". Andere dafür geeignete und bekannte Protokolle der Abschnittssicherungsschicht sind beispielsweise IEEE 802.x oder SLIP.

Aufbau, Benutzung, Abbau und ggf. Wiederaufbau usw. der realen Datenübertragungsabschnitte auf Schicht 1 durch Modul 190 - entweder zwischen TK-Endsystem 1 und Vermittlungsstelle 2 sowie zwischen VSt 2 und Gateway 5 oder direkt zwischen 1 und 5, also ohne VSt 2 - für die Implementierung dieser PPP-gesicherten logischen Schicht-2-Verbindung erfolgen unter Zuhilfnahme üblicher TK-Netztechniken und werden hier nicht diskutiert.

Die hier beschriebene Koppel-Puls Technik beruht im Wesentlichen auf einem Verfahren, das Aufbau, Benutzung, Abbau und ggf. Wiederaufbau usw. dieser realen Datenübertragungsabschnitte auf Schicht 1 so abwickelt, dass die soeben skizzierte PPPgesicherte logische Schicht-2-Verbindung zwischen dem TK-Endsystem 1 und dem TK-Netze-internen Gateway-Computer 5 von diesen einzelnen Maßnahmen nichts bemerkt. In dem hier gezeigten Ausführungsbeispiel muß sie zu diesem Zweck durch eine PPPgesicherte logische Schicht-2-Verbindung zwischen Endsystem 1 und Gateway 5 ersetzt werden, deren Implementierung dies gestattet - was weiter unten beschrieben wird.

Die gemäß dieser Hierarchie strukturierten Daten-Pakete werden im betrachteten Ausführungsbeispiel mittels einer ISDN-Karte 190 über die TAL 4 an die VSt 2 übertragen bzw. von dieser empfangen. Im Falle einer analogen Leitung zwischen dem TK-Endsystem 1 und VSt 2 des TK-Netzes würde statt einer ISDN-Karte im TK-Endsystem 1 ein Analog-Modem verwendet werden. Es wird darauf hingewiesen, dass die TAL zwischen dem TK-Endsystem 1 und der Vermittlungsstelle 2 auch in anderer Weise, etwa über ein Mobilfunknetz (GSM) hergestellt werden kann. Bei Benutzung anderer physikalischer Medien werden zwischen dem TK-Endsystem 1 und der Vermittlungsstelle 2 auch auf der Schicht 2 u.U. andere, entsprechend geeignete Übertragungsabschnittsicherungs-Verfahren eingesetzt.

Die IP-Adresse der Schicht 130 des TK-Endsystems 1 dient seiner Kommunikation mit anderen TK-Endsystemen per Internet. Sie wird ihm von dem Gateway 5 zur Verfügung gestellt, wenn es eine Internet-Verbindung aufbaut - falls es noch keine hat.

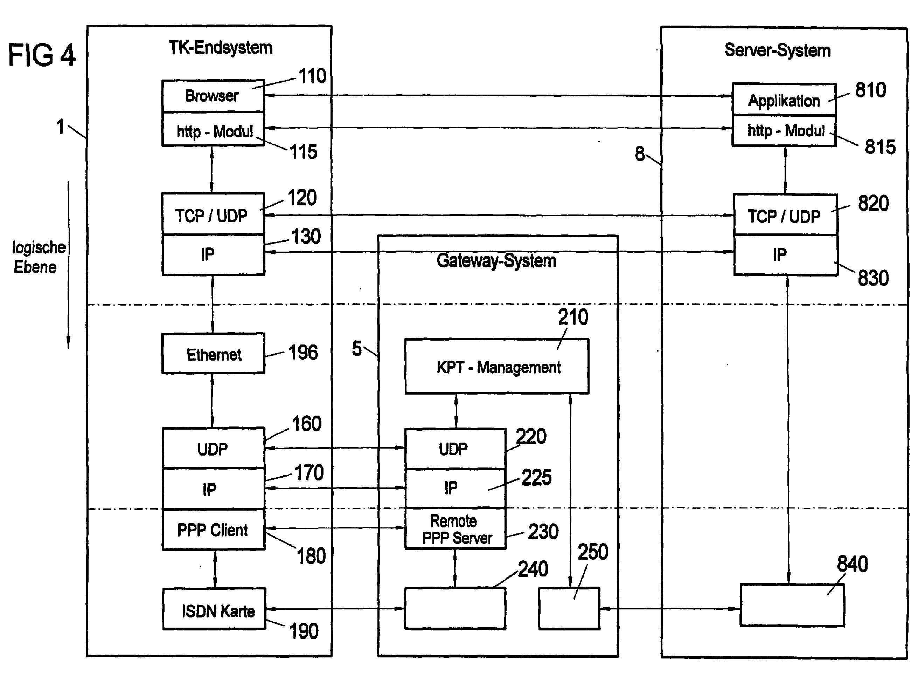

Der in den letzten Abschnitten beschriebene Aufbau ist Teil der üblichen "Internet-Architektur" und an sich bekannt, so dass auf ihn nicht weiter eingegangen wird. Das Besondere der Koppel-Puls Technik in dem vorliegenden Ausführungsbeispiel besteht darin, dass zwischen den beschriebenen Moduln mit ihren Kommunikations-Funktionalitäten der Intemet-üblichen logischen Ebenen weitere KPT-Moduln - nämlich die zwischen den Strich-Punkt-Linien in Fig. 3 und 4 - so eingefügt sind, dass sie die "übliche" PPP-Verbindung zwischen Modul 140 im TK-Endsystem 1 und Modul 230 im Gateway 5 durch eine KPT/PPP-Verbindung zwischen Modul 180 im TK-Endsstem 1 und wiederum dem Modul 230 im Gateway 5 ersetzen, ohne dies die Moduln der darüberliegenden Schichten wissen zu lassen.

Demnach ist im TK-Endsystem 1 als KPT-spezifische Komponente zunächst ein lokaler PPP-Server 150 vorgesehen. Dieser "PPP-entkapselt" - bei abgehenden IP-Paketen - die zuvor erfolgte PPP-Einkapselung der IP-Pakete. Es handelt sich gewissermaßen um das inverse Element zum Internet-üblichen PPP-Modul 140, wie ihn der in den meisten Betriebssystemen heute kostenlos mitgelieferte "Internet stack" enthält. Die "Übliche" logische PPP-Verbindung ist damit "umgebogen": Sie verlässt nun das Endsystem 1 gar nicht!

Des weiteren beinhaltet die KPT-Erweiterung des TK-Endsystems 1 auf Schicht 2 zwei zusätzliche Moduln 160 und 170 für das UDP-Protokoll und das IP-Protokoll. Diese beiden Protokolle werden hier also in einer "verfremdeten" Weise eingesetzt: Nämlich auf der Schicht 2 und zur Unterstützung der Implementierung der KPT/PPP-Verbindung in dem oben beschriebenen Sinne hinsichtlich der temporären Abschaltbarkeit der von ihr benutzten Datenübertragungs-Verbindung (L1). Insbesondere ist die IP-Adresse des Moduls 170 ihrer "üblichen" Bedeutung beraubt, weil sie gar nicht zur Adressierung eines TK-Endsystems über das Internet dient - sondern einem ganz anderen Zweck, wie eben erläutert.

Vom http-Modul im TK-Endsystem 1 abgesandte Pakete werden nun insgesamt sieben weitere Male ein-/ausgepackt, entsprechend den Moduln 120, 130, 140, 150, 160, 170 und 180. Dabei implementiert Modul 180 auf dem Endsystem 1 Endgeräte-seitig die logische (KPT/PPP)Abschnittssicherungs-Verbindung der Koppel-Puls Technik. Diese logische KPT/PPP-Verbindung ersetzt im Endsystem 1 die "umgebogene" übliche logische PPP-Verbindung auf eine für alle darüber liegenden logischen Verbindungen und auch für das KPTIPPP-Gateway nicht wahrnehmbare Weise, also völlig transparent.

Mit "Koppel-Puls Technik" werden diese von dem Intemet-Anwendungssystem auf dem Endsystem 1 abgesandten Informationen mit ihrer schrittweise auf-/ab-/aufgebauten http/TCP/IP/PPP-Einkapsetung vom Modul 180 schließlich an die logische Datenübertragungs-Verbindung (L1) - auf dem Endsystem 1 implementiert durch den Modul 190 mit ISDN-Karte und den ISDN-Anschluss an die TAL 4 - ausgesandt. Die Datenübertragungs-Verbindung (L1) wird dabei dann komplettiert, wenn aktuell zu übertragende Daten vorliegen. Ansetzend an das Ende der Datenübertragung wird sofort oder innerhalb einer sehr kurzen Zeitspanne die Datenübertragungs-Verbindung (L1) wieder abgebaut.

Betrachten wir nun die Struktur des "TK-Endsystem-seitigen" Kommunikationssystems eines PPP-Gateways 5 auf den OSI-Schichten 1 bis 3. Dabei ist sein L3-Modul im beschriebenen Kontext bereits irrelevant, weil es von einem Einsatz bzw. Nlchteinsatz der Koppel-Puls Technik nicht berührt wird. Figur 3 weist ein L3-Modul deshalb auch nicht aus.

Am TK-Gateway 5 liegen in einem Modul 240 an sich bekannte Funktionalitäten der logischen Datenübertragungsabschnitts-Schicht (L1) vor, die dort die Daten empfangen bzw. aussenden - bei umgekehrter Richtung der Datenübertragung - sowohl bei als auch ohne Einsatz der Koppel-Puls Technik.

Enthielte der PPP-Gateway 5 keine KPT-Funktionalität, so läge über seinem Modul 240 (L1) nur noch der Remote PPP-Server 230 (L2), der zusammen mit dem PPP-Client_1 140 (L2) des Endsystems 1 die Internet-übliche logische (PPP-)Abschnittssicherungs-Verbindung implementiert.

Anders in einem KPT/PPP-Gateway 5: Hier
- arbeitet der Remote PPP-Server 230 (L2) mit dem PPP-Client_2 180 (L2) zusammen, um die Internet-übliche logische (PPP-)Abschnittssicherungs-Verbindung zu realisieren, die nachfolgend meistens (KPT/PPP-) Abschnittssicherungs-Verbindung genannt wird, um sie von der im Endsystem 1 "annulierten" PPP-Verbindung (zwischen den Moduln 140 und 150) zu unterscheiden.
- gibt es oberhalb des Remote PPP-Server Moduls 230 auf der Schicht 2 im Gateway 5 die zusätzlichen KPT-spezifischen Moduln 225, 220 und 210.

Die Aufgabe der Moduln 225 und 220 besteht darin, dafür zu sorgen, dass die im KPT/TK-Endsystem 1 durchgeführte, zusätzliche und KPT-bedingte, Ver-/Entkapselung von IP-Paketen in den dortigen Moduln 160 und 170 auf dem Gateway 5 antizipiert (auf dem Weg der IP-Pakete von 5 nach 1) bzw. annuliert (auf ihrem Weg von 1 nach 5) wird. Die Moduln 225 und 220 auf dem KPT/PPP-Gateway 5 sorgen also zusammen mit den Moduln 170 und 160 auf dem KPT/TK-Endsystem 1 dafür, dass die höheren logischen Verbindungen/Assoziationen von diesen darunterliegenden - und in der logischen KPT/PPP-Verbindung noch über dem PPP-Protokoll liegenden - Protokollen UDP/IP nichts erfahren.

Mit Hilfe dieser zusätzlichen UDP/IP-Protokolle kann man nun das Ab- und Anschaltungen von Datenübertragungs-Verbindungen zwischen dem KPT/TK-Endsystem 1 und dem KPT/PPP-Gateway 5 Intemet-Standard-konform so managen, dass die darüber liegenden logischen Verbindungen davon nichts erfahren. Dabei sorgt der KPT-Management Modul 210 dafür, dass die logische (KPTIPPP-)Abschnittssicherungs-Verbindung so lange bestehen bleibt wie die darüberligenden logischen Verbindungen - unabhängig vom aktuellen Bestehen einer darunterliegenden Datenübertragungs-Verbindung.

Die in den höheren logischen Verbindungen vom KPTITK-Endsystem 1 abgesandten Daten erreichen den KPT-Management-Modul 210 über diese logische (KPT/PPP-) Abschnittssicherungs-Verbindung als IP-Pakete entsprechend der logischen Schicht-3-Assoziation, beim TK-Endsystem 1 implementiert durch Modul 130 und beim Internet-Server implementiert durch Modul 830. Zur weiteren Übertragung dieser IP-Pakete vom Modul 210 an den Intemet-Server 8 werden die Daten in an sich bekannter an ein Modul 250 des Gatesways 5 für die unteren Schichten gegeben und von dort über das Paketvermittlungsnetz an den Intemet-Server 8 übertragen. Bei entgegengesetzter Übertragungsrichtung ist die Reihenfolge natürlich umgekehrt.

Grundsätzlich können die Moduln 210, 220 und 225 dabei auch in einem externen System angeordnet sein, mit dem der Gateway 5 verbunden ist.

Der Internet-Server 8 weist im Modul 840 wiederum an sich bekannte Funktionalitäten auf, die die Daten von den unteren Schichten empfangen bzw. - bei umgekehrter Richtung der Datenübertragung - an sie aussenden. Die Daten werden im Modul 830 gemäß dem IP-Protokoll der Netzwerkschicht (L3), im Modul 820 gemäß dem TCP- oder UDP-Protokoll der Transportschicht (L4) und schließlich im Modul 810 gemäß einem Anwendungs-Protokoll (eines womöglich proprietären Intemet-Anwendungs-Systems auf L7) bearbeitet, wobei dieses Internet-Anwendungs-System die Funktionalitäten anderer "standardisierter" Internet-Anwendungs-Systeme benutzen kann, etwa eine http-Modul 815 (oder einen FTP-Modul).

Nachfolgend wird anhand eines einfachen Beispiels skizziert, wie einer logischen Schicht-3-Assoziation der üblichen Internet-Architektur mittels dieser KPT-Moduln ein ununterbrochenes Weiterbestehen der von ihr benutzten logischen (KPT/PPP-) Abschnittsicherungs-Verbindung zwischen dem KPTITK-Endsystem 1 und dem KPT/PPP-Gateway 5 vorgespiegelt wird.

Ein temporärer KPT-gemäßer Verbindungsabbau der realen Datenübertragungsabschnitte (L1) zwischen KPT/TK-Endsystem 1 und KPT/PPP-Gateway 5 erfolgt auf Seiten des TK-Endsystems 1 - und beispielsweis von diesem ausgelöst, nachdem es Daten zum Gateway 5 abgesandt hat - allein auf den Schichten 150 bis 190. Der Modul 140 bleibt davon unberührt. So erfährt auch der Modul 130 des Betriebssystems des TK-Endsystems 1, beispielsweise Windows®, nichts von diesem Verbindungsabbau auf L1, da der PPP Modul 140 Daten immer an den Modul 150 abgeben kann und dann von diesem lokalen KPT/PPP-Server 150 dahingehend informiert wird, dass die Daten in protokollkonformer Weise vom Gateway 5 empfangen wurden - was offensichtlich unzutreffend ist. Dass sich der KPT/PPP-Server 150 im KPT/TK-Endsystem selbst befindet, wird von Modul 140 nicht erkannt.

Für den TK-Endsystem-seitigen Modul der logischen (PPP-)Abschnittsicherungs-Verbindung zwischen TK-Endsystem 1 und PPP-Gateway 5, für Modul 140, bleibt diese aufrecht erhalten und seine "darüberliegende" IP-Adresse bestehen - auch nach einem vom KPT/TK-Endsystem 1 ausgelösten Abbau der Datenübertragungs-Verbindung 4 von ihm zum KPT/PPP-Gateway 5. Tatsächlich verlässt diese simulierte PPP-Verbindung das KPT/TK-Endsystem gar nicht, hat also mit einem solchen L1-Verbindungsabbau auch überhaupt nichts zu tun.

Insbesondere gibt es für den L3-Moduln 130 des KPT/TK-Endsystems 1 deshalb keinen Anlass, bei einem Wiederaufbau dieser darunterliegenden realen DÜ-Abschnitte (DÜ = Datenübertragung) von ihm zum KPT/PPP-Gateway 5 von diesem die Zuweisung einer neuen IP-Adresse zu verlangen: 130 hat ja zwischenzeitlich den L1-Verbindungsabbau gar nicht wahr genommen. Auf diese Weise wird die IP-Adresse des KPTITK-Endsystems 1 bei einem derartig verschleierten Abbau und erneuten Aufbau von realen DÜ-Abschnitten zwischen ihm und dem Gateway 5 beibehalten.

Mit der IP-Adresse bleibt auch die logische Schicht-3-IP-Assoziation zwischen dem KPT/TK-Endsystem 1 und dem Internet-Server 8 bei einem solchen Abbau von realen DÜ-Abschnitte erhalten.

Ein erneuter kurzfristiger Wiederaufbau dieser realen DÜ-Abschnitte wird TK-Endsystemseitig durch die Schichten 150 bis 190 vorgenommen, wobei die bereits vorhandene IP-Adresse weiterverwendet wird.

Geht der Ab- oder Aufbau dieser realen DÜ-Abschnitte vom KPT/PPP-Gateway 5 aus, so sind hier die Modul 210, 220, 225, 230 und 240 in der gleichen Weise involviert, wie gerade beim KPT/TK-Endsystem 1 beschrieben: Auch in diesem Fall erfährt der Modul 830 im Internet-Server 8 nichts von diesen Vorgängen.

Die vorangehend Erläuterung der Arbeitsweise der Koppel-Puls Technik genügt, um ihre grundsätzliches Verfahren und die grundsätzlichen Implementierungsstrukturen der dabei involvierten Systeme aufzuzeigen. Dieses grundsätzliche Verfahren kann auch in einer Vielzahl von anders strukturierten Kommunikationsvogängen zwischen TK-Systemen in dem Sinne, der mit diesem Verfahren verfolgt wird, zum Einsatz kommen.

Auch die Implementierungsstruktur, die die Figur 3 zeigt, ist selbstverständlich nur beispielhaft zu verstehen. Es kommt lediglich darauf an, dass im TK-Endsystem 1 und im Gateway 5 Mittel vorgesehen sind (in der Regel Software-Moduln), die bewirken, dass die involvierten höheren Kommunikations-Moduin in beiden TK-Sytemen nicht erkennen, wenn die sie verbindende physikalische Verbindung abgebrochen bzw. wieder aufgebaut wird. Es besteht dann auch kein Anlass, bei ihrer Wiederherstellung eine erneute Zuordnung einer IP-Adresse für die Kommunikation des TK-Endsystems 1 mit dem Internet-Server 8 zu veranlassen. Diese IP-Adresse des Moduls 130 des TK-Endsytems bleibt für die gesamte Dauer seiner Kommunikation mit dem Internet über alle temporären aber KPT-gemäßen Ab-/Aufbauwiederholungen der physikalischen Verbindung zwischen 1 und 5 unverändert.

Unbeschadet dessen kann die IP-Adresse des TK-Endsystems 1, die in seiner logischen "KPT-UDP/IP-Assoziationen" zwischen den PPP-Moduln 170 und 225 benutzt wird, im Bedarfsfall bei jedem Neuaufbau der darunterliegenden physikalischen Verbindung geändert werden.

### Erläuterung der Figur 4

Eine alternative Struktur der KPT-Erweiterung ist in der Figur 4 dargestellt. Die beiden horizontalen Strich-Punkt-Linien haben die gleiche Bedeutung wie in Figur 3.

Der einzige Unterschied zur Figur 3 liegt im Block 196 im TK-Endsystem 1. Statt eines PPP Client_1 und eines lokalen PPP-Servers ist ein Modul 196, der eine Ethemet-Schnittstelle emuliert, vorgesehen. Über bekannte Verfahren (z.B. DHCP) wird dem Modul 130 im TK-Endsystem 1 bei seinem "einloggen" in das Internet eine IP-Adresse zur Verfügung gestellt. Dies erfolgte im Ausführungsbeispiel der Fig. 3 durch den lokalen PPP-Server 140.

Der Modul 196 mit der emulierten Ethemet-Schnittstelle signalisiert den darüber liegenden Moduln des TK-Endsystems 1, dass von ihnen abgesandte Daten über seinen Ethernet-Adapter an ein lokales Netz (LAN) bzw. an eine "wireless" lokales Netz (WLAN) weitergereicht wurden. Dabei gilt die Konvention, dass die Daten nach Abgabe an einen Ethernet-Adapter auch ihren Adressaten im Ethernet erreichen, solange der Ethemet-Adapter nichts davon abweichendes signalisiert. Dementsprechend bleibt die IP-Adresse des Modul 130 erhalten. Die weiteren Schichten sind wie die IN Fig. 3 beschrieben aufgebaut.

Es wird dabei darauf hingewiesen, dass es im TK-Endsystem 1 gar keinen Ethernet-Adapter gibt. Der Modul 196 suggeriert dies den darüberliegenden Moduln lediglich mittels seiner Ethernet-Schnittstellen-Emulation. Dementsprechend ist es auch nicht erforderlich, im Gateway 5 ein Gegenstück zu einem Ethernet-Adapter vorzusehen, weil die übertragenen Pakete keinen Ethernet Header beinhalten.

Schließlich sei angemerkt, dass sowohl hier - wie auch im Beispiel der Figur 3 - der Abbau ebenso wie der Aufbau einer KPT/PPP-Verbindung sowohl durch das Gateway 5 als auch durch das TK-Endsystem 1 initiiert werden kann.

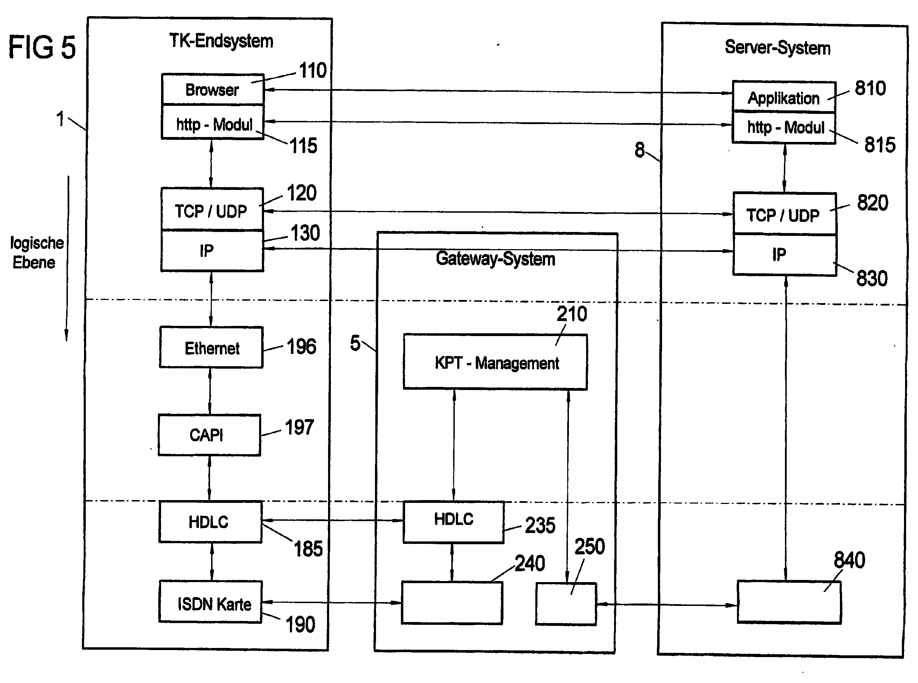

### Erläuterung der Figur 5

Eine weitere alternative Struktur der KPT-Erweiterung ist in der Figur 5 dargestellt. Die beiden horizontalen Strich-Punkt-Linien haben die gleiche Bedeutung wie in den Figuren 3 und 4.

Der Unterschied zum Ausführungsbeispiel der Figur 4 besteht darin, dass die Daten von der emulierten Ethemet-Schnittstelle 196 an ein HDLC-Modul 185 weitergegeben werden. "HDLC" bezeichnet ein Protokoll der Ebene 2 des OSI-Referenzmodells, das Daten als HDLC-Pakete/-Frames versendet.

Wie bereits in Bezug auf die Fig. 4 erläutert, signalisiert der Modul 196 mit der emulierten Ethemet-Schnittstelle den darüber liegenden Moduln 130, 120, 115, 110 des TK-Endsystems 1, dass von ihnen abgesandte Daten über seinen Ethemet-Adapter an ein lokales Netz (LAN) bzw. an eine "wireless" lokales Netz (WLAN) weitergereicht wurden. Dabei gilt die Konvention, dass die Daten nach Abgabe an einen Ethernet-Adapter auch ihren Adressaten im Ethernet erreichen, solange der Ethernet-Adapter nichts davon abweichendes signalisiert. Dementsprechend bleibt die IP-Adresse des Modul 130 erhalten.

Vom Modul 196 werden die Daten dann ohne eine Änderung an das HDLC-Modul 185 gegeben. Die in der Fig. 4 vorgenommene weitere Kapselung der Daten in UDP/IP-Modulen entfällt. Statt eines PPP-Moduls kommt bei der Ausgestaltung der Fig. 5 ein HDLC-Modul zum Einsatz. Der zugehörige Verbindungsaufbau für die betrachtete L2-Verbindung kann im Falle eines ISDN-Endsystems 1 beispielsweise durch eine CAPl 197 (Common Application Programming Interface) Schnittstelle erfolgen.

Die HDLC-Datenpakete werden mittels einer ISDN-Karte 190 an das Gateway-System 5 übertragen bzw. - bei umgekehrter Richtung der Datenübertagung - von dieser empfangen. Im Gateway-System 5 befindet sich ein entsprechendes HDLC-Modul 235, dass die HDLC-Paketierung rückgängig macht.

Ein Aufbau und Abbau der HDLC-Verbindung auf der Schicht 2 des OSI-Referenzmodells und der physikalischen Verbindung auf der Schicht 1 des OSI-Referenzmodells zwischen dem TK-Endsystem 1 und dem Gateway-System 5 wird von den Schichten 130, 120, 115, 110 oberhalb des Moduls 196 mit der emulierten Ethemet-Schnittstelle nicht erkannt, da diese nach Abgabe der Daten an das Modul 196 einen solchen Verbindungsaufbau- und abbau nicht signalisiert bekommen.

Statt HDLC können auch andere Datenübertragungsabschnitt-Sicherungs-Protokolle verwendet werden.

Zum Abschluß der Diskussion möglicher Implementierungsstrukturen von KPT-Funktionalitäten, wie sie die Figuren 3 bis 5 skizzieren, noch zwei ganz grundsätzliche Hinweise zu ihrem nur beispielhaften Charakter:
1. Die hier skizzierten Strukturen sind realisierbar, wenn man die Implementierung der KPT-Funktionalitäten möglichst weitgehend mit System-Moduln realisieren möchte, die heute mit den am Markt dominierenden Betriebssystemen kostenlos mitgeliefert werden - also mit möglichst geringem eigenen Implementierungsaufwand, und auch noch unter möglichst weitgehender Vermeidung nicht-Intemet üblicher oder nicht-Windows/Unix/Linux-üblicher Protokolle, Moduln, Abstraktionsebenen oder Schnittstellen.
2. Wesentlich einfachere und effizientere Implementierungsstrukturen für die KPT-Funktionalitäten bieten sich an, sobald man bereit ist, einen größeren Implementierungsaufwand in Kauf zu nehmen und/oder die eben angesprochenen Üblichkeiten außer Betracht zu lassen.

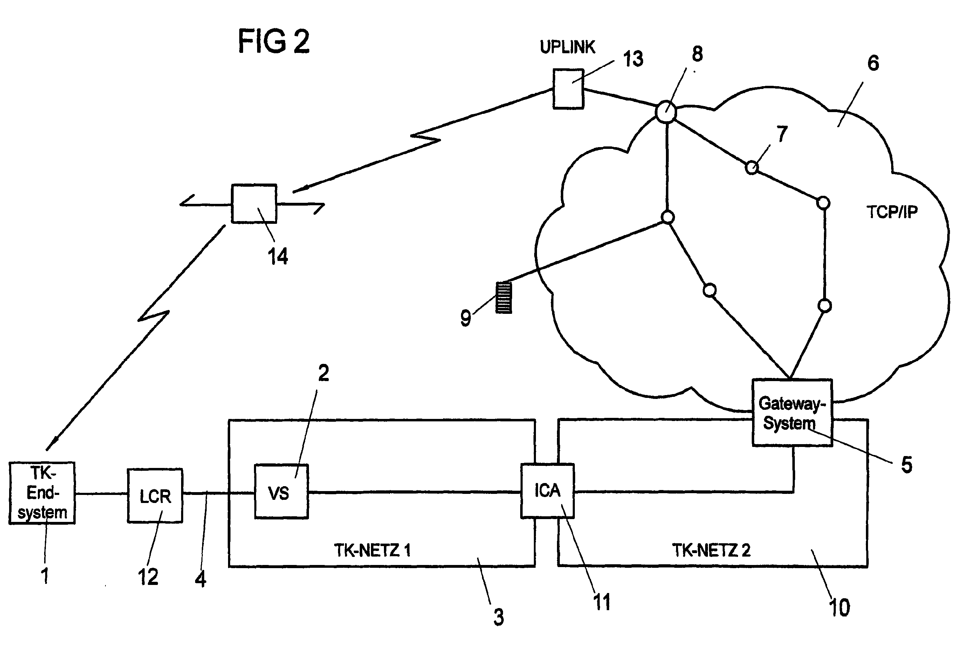

### Erläuterung der Figur 2

Die Fig. 2 zeigt ein zweites TK-Szenario eines Kommunikationsvorganges zwischen einem TK-Endsystem 1 und einem Server-System 8. Gleiche Objekte wie in Fig. 1 sind dabei mit gleichen Bezugszeichen gekennzeichnet.

Das TK-Szenariio der Fig. 2 unterscheidet sich im Wesentlichen in zwei Aspekten von dem TK-Szenario der Fig. 1. Ein erster Unterschied besteht darin, dass die Verbindung zwischen dem TK-Endsystem 1 und dem Gateway 5 über ein erstes TK-Netz 3 und ein zweites TK-Netz 10 erfolgt, die über einen Interconnect-Anschluss (ICA) 11 zusammengeschaltet sind. Dementsprechend ist vorgesehen, dass die vom TK-Endsystem 1 an die Vermittlungsstelle 2 gesandten Daten von dieser über einen ICA 11 zu einem zweiten TK-Netz 10 gegeben werden. In diesem werden die Daten dann zu dem Gateway 5 übertragen.

In der Regel handelt es sich bei dem ersten TK-Netz 3 um das des ehemaligen Monopolisten, dass heißt in Deutschland der Deutsche Telekom AG (DTAG), die den Ortsnetzzugang bereitstellt. Von diesem TK-Netz 3 wird eine Verbindung zum Gateway 5 i.d.R. an das TK-Netz 10 eines alternativen Internet Service Providers (ISP) weitergeleitet, dem auch das Gateway 5 gehört. Für dieses Durchleiten einer Verbindung verlangt der Betreiber des ersten TK-Netzes 3 eine sogenannte Interconnect-Gebühr, die in der Regel zeitabhängig erhoben wird. Beispielsweise wird eine Gebühr für jede Sekunde berechnet, die ein Datenkanal vom TK-Endsystem 1 an das zweite TK-Netz 10 durchgeschaltet ist.

Zur Auswahl eines geeigneten zweiten TK-Netzes 10 kann zwischen dem TK-Endsystem 1 und der Vermittlungsstelle 2 ein sogenannter Least-Cost-Router (LCR) 12 vorgesehen sein, der ein bestimmtes zweites TK-Netz anhand bestimmter Kriterien, insbesondere Preiskriterien festlegt. Der Least-Cost-Router 12 ist jedoch optional - alternativ kann der Nutzer des TK-Endsystems 1 das zweite TK-Netz durch dynamisches "call by call", dass heißt unter Benutzung einer bestimmten Vorwahlnummer beim jeweiligen Verbindungsaufbau, oder durch statische "preselection" für alle seine Verbindungen auswählen.

Ein zweiter Unterschied des Ausführungsbeispiels der Fig. 2 gegenüber dem Ausführungsbeispiel der Fig. 1 besteht darin, dass der Rückkanal vom Server-System 8 zum TK-Endsystem 1 nicht über das Paketvermittlungsnetz 6 und die beiden TK-Netze 3 und 10 realisiert werden muß, sondern über ein weiteres TK-Netz realisiert werden kann, das im dargestellten Ausführungsbeispiel ein Satelliten-Netz 14 ist. Die Daten, die vom Server-System 8 zum TK-Endsystem 1 heruntergeladen werden sollen (Downstream-Daten) werden hier über das weitere TK-Netz unmittelbar zum TK-Endsystem 1 übertragen. Ein solches Verfahren ist ausführlich in der EP 0 998 093 A2 beschrieben, auf die insofern Bezug genommen wird.

Bei dem Ausführungsbeispiel der Fig. 2 erfolgt die Datenübertragung zwischen dem TK-Endsystem 1 und dem Server-System 8 insofern asymmetrisch, als lediglich die Upstream-Daten über mindestens ein TK-Netz 3, 10 und anschließend das TK-Paketvermittlungsnetz 6 (das Internet) übertragen werden, während die Downstream-Daten über ein weiteres TK-Netz, nämlich ein Satelliten-Netz, an das TK-Endsystem 1 zurückübertragen werden.

In einer leicht alternativen Ausgestaltung des Ausführungsbeispiels der Fig. 2 werden die herunterzuladenden Downstream-Daten nur teilweise vom Server-System 8 über das Satelliten-Netz zum TK-Endsystem 1 übertragen. Ein Teil der Daten wird dagegen über das Internet 6 und mindestens eines der TK-Netze 10, 3 an das TK-Endsystem 1 übertragen. Dies ermöglicht, ohnehin bereitstehende Bandbreite über das Internet und die PSTN/ISDN-Verbindung zu nutzen.

Das Server-System 8 kann ein Proxy-Server sein, der von weiteren Servern 9 an das TK-Endsystem zu übertragende Daten erhält.

In einer bevorzugten Ausführungsform werden an das TK-Endsystem 1 zu übertragende Daten beim Server-System 8 gesammelt, bevor sie zum TK-Endsystem 1 übertragen werden. Beispielsweise wird bei einer http-Anwendung zunächst eine www-Seite komplett beim Server-System 8 aufgebaut, wobei in der Regel mehrere TCP-Verbindungen zu anderen Servern aufgebaut und zugehörige Daten von dort darüber abgeholt werden müssen. Nach dem kompletten Aufbau der vom TK-Endsystem angeforderten www-Seite beim Server-System 8 werden sämtliche zugehörige Daten gemeinsam an das TK-Endsystem übertragen. Der Vorteil besteht darin, dass das TK-Endsystem 1 nur einmal Bestätigungspakete betreffend den Empfang der Daten aussenden muss. Eine physikalische Verbindung zwischen dem TK-Endsystem 1 und dem Gateway 5 gemäß der hier beschriebenen "Koppel-Puls Technik" muss daher zur Bestätigung des Erhalts der www-Seite nur einmal für eine kurze Zeit aufgebaut werden (und nicht für jede Komponente der www-Seite, d.h. für jede ihrer TCP-Verbindungen gesondert), so dass eine weitere Kostenersparnis vorliegt.

Alternativ werden die Bestätigungspakete beim TK-Endsystem gesammelt, bis ein vorgegebenes Datenvolumen vorliegt. Bei dieser Variante kann es jedoch zu zeitlichen Verzögerungen bei der Rücksendung der Bestätigungspakete kommen.

Die Erfindung beschränkt sich in ihrer Ausgestaltung nicht auf die vorstehend dargestellten Ausführungsbeispiele. Beispielsweise können andere Zugangsnetze zwischen dem TK-Endsystem 1 und dem Gateway 5 realisiert werden, etwa ein GSM-Mobilfunknetz. Auch der Breitband-Rückkanal kann in anderer Weise realisiert werden, beispielsweise über ein Femsehkabel oder ein Stromkabel.

## Patentansprüche

1. Verfahren der Datenübertragung zwischen einem ersten und einem zweiten Telekommunikationssystem, hiernach als TK-System bezeichnet wobei mindestens eines der TK-Systeme ein TK-Endsystem ist, wobei
- mindestens eine in einem Kommunikationsvorgang zwischen den beiden TK-Systemen (1, 5) benutzte Verbindung, nämlich zumindest die logischen L1- bis L3-Verbindungen/-Assoziationen im Sinne des OSI-Referenzmodells, zur Datenübertragung über mindestens einem Datenübertragungsabschnitt nur dann komplettiert werden, wenn zwischen den TK-Systemen (1, 5) zu übertragende Daten aktuell vorliegen,
- nach der Komplettierung der logischen L1- bis L3-Verbindungen/-Assoziationen die aktuell vorliegenden Daten übertragen werden,
- festgestellt wird, wann die Übertragung dieser Daten über den mindestens einen Datenübertragungsabschnitt beendet ist, und
- ansetzend an das Ende der Datenübertragung sofort oder innerhalb einer sehr kurzen Zeitspanne ein Abbau der zuvor komplettierten logischen L1- bis L3-Verbindungen/-Assoziationen über diesen mindestens einen Datenübertragungsabschnitt veranlasst wird,
- ohne dass eine L7-Verbindung zwischen den TK-Systemen (1, 5) oder zwischen einem der TK-Systeme (1) und einem weiteren TK-System (8, 9) von einem solchen Abbau tangiert wird.

2. Verfahren nach Anspruch 1, **dadurch gekennzeichnet, dass** nach dem Ende der Datenübertragung ein Steuerbefehl zum Abbau der logischen L1- bis L3-Verbindungen/Assoziationen erzeugt wird.

3. Verfahren nach Anspruch 2, **dadurch gekennzeichnet, dass** mittels eines Algorithmus automatisch festgestellt wird, wann eine Übertragung aktuell vorliegender Daten abgeschlossen ist, und nach dieser Feststellung sofort oder innerhalb einer sehr kurzen Zeitspanne ein Steuerbefehl zum Abbau der logischen L1- bis L3 -Verbindungen/Assoziationen erzeugt wird.

4. Verfahren nach mindestens einem der vorangehenden Ansprüche, **dadurch gekennzeichnet, dass** ein Abbau der L1- bis L3-Verbindungeni-Assoziationen innerhalb eines Zeitraums von maximal einer Sekunde, besonders bevorzugt innerhalb eines Zeitraums von maximal einer Zehntel Sekunde nach dem Ende der Datenübertragung veranlasst wird.

5. Verfahren nach mindestens einem der vorangehenden Ansprüche, **dadurch gekennzeichnet, dass** ein Abbau der L1- bis L3-Verbindungen/-Assoziationen nach dem Ende der Datenübertragung innerhalb einer derart kurzen Zeitspanne veranlasst wird, dass das Ende der Gebührenpflicht in den aktuellen Gebührentakt des Netzbetreibers fällt, der die Verbindung bereitstellt.

6. Verfahren nach mindestens einem der vorangehenden Ansprüche, **dadurch gekennzeichnet, dass** bei dem sendenden TK-System zu übertragende Daten gesammelt werden und erst bei Erreichen eines bestimmten Datenvolumens oder eines anderen bestimmten Ereignisses die Komplettierung zuvor abgebauter L1- bis L3-Verbindungen/-Assoziationen und die aktuelle Datenübertragung zum empfangenden TK-System erfolgt.

7. Verfahren nach Anspruch 6, **dadurch gekennzeichnet, dass** das Datenvolumen eine maximale Größe derart aufweist, dass die Übertragung der Daten innerhalb eines Zeitraums erfolgen kann, der gleich dem Gebührentakt oder einem Vielfachen des Gebührentaktes desjenigen TK-Netzbetreibers ist, der am Aufbau der zuvor abgebauten L1- bis L3-Verbindungenl-Assoziationen beteiligt ist und der von allen diesen TK-Netzbetreibem die höchsten Verbindungs-/Assoziationszeltabhängigen Kosten verursacht

8. Verfahren nach mindestens einem der Ansprüche 1 bis 5, **dadurch gekennzeichnet, dass** für bestimmte privilegierte Daten die Komplettierung einer zuvor abgebauten L1- bis L3-Verbindung/-Assoziation sofort nach Vorliegen der Daten am sendenden TK-System (1, 5) vorgenommen wird.

9. Verfahren nach mindestens einem der vorangehenden Ansprüche, **dadurch gekennzeichnet, dass** das Ende einer Datenübertragung durch ein Überwachungssystem mit einer Verifikationsroutine überwacht wird, die überprüft, ob noch Daten übertragen werden und den Abbau der logischen L1- bis L3Verbindungen/Assoziationen veranlasst, sobald sie feststellt, dass eine Datenübertragung nicht mehr stattfindet.

10. Verfahren nach mindestens einem der vorangehenden Ansprüche, **dadurch gekennzeichnet, dass** das sendende TK-System ein Router eines lokalen Netzes ist, der Daten einer Vielzahl von Geräten des lokalen Netzes erhält und diese Daten gemultiplext an das andere TK-System überträgt.

11. Verfahren nach mindestens einem der vorangehenden Ansprüche, **dadurch gekennzeichnet, dass** ein Abbau der L1- bis L3-Verbindungen/-Assoziationen und/oder die Komplettierung der abgebauten L1- bis L3-Verbindungen/-Assoziationen durch das sendende und/oder das empfangende TK-System und/oder ein in den Kommunikationsvorgang involviertes System veranlasst wird.

12. Verfahren nach mindestens einem der vorangehenden Ansprüche, **dadurch gekennzeichnet, dass** die Authentifizierung beim Wiederaufbau einer abgebauten logischen L1- bis L3-Verbindung/-Assoziation unter Bezugnahme auf diese abgebaute logische L1- bis L3-Verbindung/-Assoziation erfolgt.

13. Verfahren nach mindestens einem der vorangehenden Ansprüche, **dadurch gekennzeichnet, dass** es in einem Kommunikationsvorgang zwischen einem TK-Endsystem (1) und einem Server-System (8, 9), insbesondere einem Internet-Server, eingesetzt wird, wobei
- das TK-Endsystem (1) das erste TK-System und ein Gateway-System (5) das zweite TK-System ist,
- das TK-Endsystem (1) mit dem Gateway-System (5) über mindestens ein TK-Netz (3, 10, 6) verbunden ist,
- das Gateway-System (5) ein Zugangspunkt zu einem Paketvermittlungsnetz (6) ist oder mit einem solchen verbunden ist,
- vom TK-Endsystem (1) an das Server-System (8, 9) zu übertragende Daten des Kommunikationsvorgangs von ersterem zum Gateway-System (5) und von diesem über das Paketvermittlungsnetz (6) weiter an das Server-System (8, 9) übertragen werden, wobei
- alle Li-Verbindungen/Assoziationen (3 kleinergleich i kleinergleich 7) zwischen dem TK-Endsystem (1) und dem Server-System (8, 9) des Kommunikationsvorgangs aus Sicht des Server.Systems (8, 9) unberührt bleiben von einem Abbau und nachfolgenden erneuten Aufbau von mindestens einem Datenübertragungsabschnitt der logischen L1-bis L3-Verbindungen darin zwischen dem TK-Endsystem (1) und dem Gateway-System (5).

14. Verfahren nach Anspruch 13, **dadurch gekennzeichnet, dass** die IP-Adresse (130) des TK-Endsystems (1) in einer Internet-Verbindung zwischen dem TK-Endsystem (1) und dem Server-System (8, 9) unverändert bleibt bei einem Abbau und nachfolgenden erneuten Aufbau von mindestens einem Datenübertragungsabschnitt der logischen L1-bis L3-Verbindungen darin zwischen dem TK-Endsystem (1) und dem Gateway-System (5).

15. Verfahren nach Anspruch 13 oder 14, **dadurch gekennzeichnet, dass** das TK-Endsystem (1) Funktionalitäten einer Mehrzahl von Moduln (150, 160, 170, 180; 196, 160, 170; 196, 185) in seinen Datenaustausch mit dem Gateway-System (5) involviert, wobei die Moduln (150, 160, 170, 180; 196, 160, 170; 196, 185) bewirken, dass ein Ab-/Aufbau der L1- bis L3-Verbindung über mindestens einen Datenübertragungsabschnitt zwischen dem TK-Endsystem (1) und dem Gateway-System (5) vor logischen Li-Verbindungen ab der Ebene 3 (3 kleinergleich i kleinergleich 7) zwischen dem TK-Endsystem (1) und dem Server-System (8, 9) verborgen bleibt.

16. Verfahren nach Anspruch 15, **dadurch gekennzeichnet, dass** das TK-Endsystem (1) lokal ein PPP-Modul (140) - oder ein funktional vergleichbares Modul - und ein dazu inverses PPP/vergleichbares Modul (150) aufweist.

17. Verfahren nach Anspruch 15, **dadurch gekennzeichnet, dass** das TK-Endsystem (1) eine Ethemet-Schnittstelle (196) oder eine funktional vergleichbare Schnittsstelle emuliert.

18. Verfahren nach Anspruch 17, **dadurch gekennzeichnet, dass** die Daten von der Ethernet-Schnittstelle (196) an ein UDP-Modul (160) und weiter an ein IP-Modul (170) gegeben werden, die zusätzliche Verkapselungen der Daten vornehmen, die im Gateway-System (5) wieder entfernt werden.

19. Verfahren nach Anspruch 17, **dadurch gekennzeichnet, dass** die Daten von der Ethernet-Schnittstelle (196) an ein HDLC-Modul (185) - oder ein anderes funktional vergleichbares Datenübertragungsabschnitts-Sicherungs-Modul - weitergegeben werden.

20. Verfahren nach mindestens einem der Ansprüche 15 bis 19, **dadurch gekennzeichnet, dass** das TK-Endsystem (1) die von ihm abzusendenden Daten mit mindestens einer zusätzlichen Verkapselung versieht, die im Gateway-System (5) wieder entfernt wird.

21. Verfahren nach Anspruch 20, **dadurch gekennzeichnet, dass** das TK-Endsystem (1) die von ihm abzusendenden Daten auf der Ebene der Transportschicht (120, 160) und der Netzwerkschicht (130, 170) verkapselt und die untere der beiden Verkapselungen (160, 170) vom Gateway-System (5) wieder entfernt wird (225, 220).

22. Verfahren nach mindestens einem der Ansprüche 13 bis 21, **dadurch gekennzeichnet, dass** das Server-System (8) Daten enthält oder von dritten Systemen (9) empfängt, die an den TK-Endsystem (1) herunterzuladen sind (Downstream-Daten), und diese Downstream-Daten zumindest teilweise über mindestens ein weiteres alternatives TK-Netz (13, 14), insbesondere ein breitbandiges Satelliten- oder TV-Kabel-Netz, unmittelbar an das TK-Endsystem (1) übertragen werden, insbesondere nicht über das Gateway-System (5) zu laufen brauchen.

23. Verfahren nach Anspruch 22, **dadurch gekennzeichnet, dass** die Downstream-Daten unter Verwendung mehrerer Satelliten netze an das TK-Endsystem (1) übertragen werden.

24. Verfahren nach Anspruch 22 oder 23, **dadurch gekennzeichnet, dass** die Downstream-Daten einer Anwendung beim Server-System (8) gesammelt werden, bis sie vollständig vorliegen, und dann gemeinsam an das TK-Endsystem (1) übertragen werden.

25. Telekommunikationsanordnung zur Durchführung des Verfahren nach Anspruch 1 mit einem ersten TK-System (1), einem zweiten TK-System (5) und Infrastruktur zur Herstellung einer Telekommunikationsverbindung zwischen den TK-Systemen, wobei mindestens eines der TK-Systeme (1) ein TK-Endsystem ist, mit
- Mitteln zum Verbindungsaufbau, die mindestens eine in einem Kommunikationsvorgang zwischen den beiden TK-Systemen (1, 5) benutzte Verbindung, nämlich zumindest die logischen L1- bis L3-Verbindungen/Assoziationen im Sinne des OSI-Referenzmodells, zur Datenübertragung über mindestens einem Datenübertragungsabschnitt nur dann komplettieren, wenn zwischen den TK-Systemen (1, 5) zu übertragende Daten aktuell vorliegen,
- Mitteln zur Datenübertragung zwischen den TK-Systemen (1, 5),
- Mitteln zum Feststellen, wann die Übertragung dieser Daten beendet ist, und
- Mitteln zum Verbindungsabbau, die ansetzend an das Ende der Datenübertragung sofort oder innerhalb einer sehr kurzen Zeitspanne einen Abbau der zuvor komplettierten logischen L1- bis L3-Verbindungen/-Assoziationen über diesen mindestens einen Datenübertragungsabschnitt veranlassen,
- wobei die Mittel zum Verbindungsaufbau und die Mittel zum Verbindungsabbau eine L7-Verbindung zwischen den TK-Systemen (1, 5) oder zwischen einem der TK-Systeme (1) und einem weiteren TK-System (8, 9) von einem solchen Auf- und Abbau unberührt lassen.

26. Telekommunikationsanordnung nach Anspruch 25, **dadurch gekennzeichnet, dass** die Mittel zum Verbindungsabbau einen Steuerbefehl zum Verbindungsabbau aussenden, sobald die Datenübertragung beendet ist.

27. Telekommunikationsanordnung nach Anspruch 26, **dadurch gekennzeichnet, dass** die Mittel zum Feststellen einen Algorithmus umfassen, der automatisch feststellt, wann eine Übertragung aktuell vorliegender Daten abgeschlossen ist, und die Mittel zum Verbindungsabbau nach dieser Feststellung sofort oder innerhalb einer sehr kurzen Zeitspanne einen Steuerbefehl zum Abbau der logischen L1- bis L3-Verbindungenl-Assoziationen erzeugen.

28. Telekommunikationsanordnung nach mindestens einem der Ansprüche 25 bis 27, **dadurch gekennzeichnet, dass** die Telekommunikafionsanordnung aufweist:
- mindestens ein Kommunikationsnetz (3, 10), an das ein TK-Endsystem (1) angeschlossen ist,
- ein Paketvermittlungsnetz (6), in dem ein Server-System (8, 9) angeordnet ist oder zu dem das Server-System (8, 9) Zugang hat; und
- ein Gateway-System (5), das einen Zugangspunkt zu dem Paketvermittlungsnetz (6) bereitstellt oder mit einem solchen verbunden ist,
- wobei vom TK-Endsystem (1) an das Server-System (8, 9) zu übertragende Daten über das mindestens eine Kommunikationsnetz (3,10) an das Gateway-System (5) und dann vom Gateway-System (5) über das Paketvermittlungsnetz (6) weiter an das Server-System (8, 9) übertragen werden, und
- die genannten Mittel zum Verbindungsaufbau, Mittel zum Feststellen und Mittel zum Verbindungsabbau in dem TK-Endsystem (1) und/oder dem Gateway-System (5) enthalten sind.

29. Telekommunikationsanordnung nach Anspruch 28, **dadurch gekennzeichnet, dass** die Mittel zum Verbindungsaufbau und die Mittel zum Verbindungsabbau die IP-Adresse des TK-Endsystems (1) in einer Internet-Verbindung zwischen dem TK-Endsystem (1) und dem Server-System (8, 9) bei einem Abbau und nachfolgenden erneuten Aufbau von mindestens einem Datenübertragungsabschnitt der L1- bis L3-Verbindungen darin zwischen dem TK-Endsystem (1) und dem Gateway-System (5) unberührt lassen.

30. Telekommunikationsanordnung nach mindestens einem der Ansprüche 25 bis 29, **dadurch gekennzeichnet, dass** das erste TK-System (1) und/oder das zweite TK-System (5) eine Mehrzahl von Moduln (150, 160, 170, 180; 196, 160, 170; 196, 185; 210, 220, 225, 230; 210, 235) aufweist, die bewirken, dass ein Ab-/Aufbau der L1- bis L3-Verbindungen über mindestens einen Datenübertragungsabschnitt zwischen dem TK-Systemen (1, 5) vor darüberliegenden logischen Li-Verbindungen ab der Ebene 3 (3 kleinergleich i kleinergleich 7) zwischen dem TK-Endsystem (1) und dem Server-System (8, 9) verborgen bleibt.

31. TK- Endsystem zur Durchführung des Verfahren nach Anspruch 1, mit
- Mitteln zum Verbindungsaufbau, die mindestens eine in einem Kommunikationsvorgang zu einem weiteren TK-System (5) benutzte Verbindung, nämlich zumindest die logischen L1- bis L3-Verbindungen/-Assoziationen im Sinne des OSI-Referenzmodells, zur Datenübertragung über mindestens einem Datenübertragungsabschnitt nur dann komplettieren, wenn zwischen den TK-Systemen (1, 5) zu übertragende Daten aktuell vorliegen,
- Mitteln zum Übertragen der aktuell vorliegenden Daten zu dem weiteren TK-System (5),
- Mitteln zum Feststellen, wann die Übertragung dieser Daten beendet ist, und
- Mitteln zum Verbindungsabbau, die ansetzend an das Ende der Datenübertragung sofort oder innerhalb einer sehr kurzen Zeitspanne einen Abbau der zuvor komplettierten logischen L1- bis L3-Verbindungen/-Assoziationen veranlassen,
- wobei die Mittel zum Verbindungsaufbau und die Mittel zum Verbindungsabbau eine L7-Verbindung zwischen dem TK-Endsystem (1) und dem weiteren TK-System (5) oder zwischen dem TK-Endsystem (1) und einem anderen TK-System (8, 9) von einem solchen Auf- und Abbau unberührt lassen.

32. TK-Endsystem nach Anspruch 31, **dadurch gekennzeichnet, dass** dass die Mittel zum Verbindungsabbau einen Steuerbefehl zum Verbindungsabbau aussenden, sobald die Datenübertragung beendet ist.

33. TK-Endsystem nach Anspruch 31 oder 32, **dadurch gekennzeichnet, dass** die Mittel zum Feststellen einen Algorithmus umfassen, der automatisch feststellt, wann eine Übertragung aktuell vorliegender Daten abgeschlossen ist, und die Mittel zum Verbindungsabbau nach dieser Feststellung sofort oder innerhalb einer sehr kurzen Zeitspanne einen Steuerbefehl zum Abbau der logischen L1- bis L3-Verbindungen/Assoziationen erzeugen.

34. TK-Endsystem nach mindestens einem der Ansprüche 31 bis 33, **dadurch gekennzeichnet, dass** die Mittel zum Verbindungsaufbau und die Mittel zum Verbindungsabbau aus Sicht des anderen TK-Systems (8, 9) die IP-Adresse des TK-Systems (1) in einer Internet-Verbindung zu dem anderen TK-System (8, 9) von einem Abbau und nachfolgenden Aufbau mindestens eines Datenübertragungsabschnitts der L1- bis L3-Verbindungen zu dem weiteren TK-System (5) unberührt lassen.

35. TK-Endsystem nach mindestens einem der Ansprüche 31 bis 34, **gekennzeichnet durch** einen Datenspeicher, der zu übertragende Daten sammelt, wobei bei Erreichen eines bestimmten Datenvolumens die Mittel zum Verbindungsaufbau die Komplettierung der abgebauten L1- bis L3-Verbindungen/-Assoziationen und die aktuelle Datenübertragung bewirken.

36. TK-Endsystem nach mindestens einem der Ansprüche 31 bis 35, **dadurch gekennzeichnet, dass** das TK-Endsystem (1) eine Mehrzahl von Moduln (150, 160, 170, 180; 196, 160, 170; 196, 185) aufweist, die bewirken, dass ein Ab-/Aufbau der L1- bis L3-Verbindungen über mindestens einen Datenübertragungsabschnitt zwischen dem TK-System (1) und dem weiteren TK-System (5) vor darüberliegenden logischen Li-Verbindungen ab der Ebene 3 (3 kleinergleich i kleinergleich 7) zwischen dem TK-Endsystem (1) und dem anderen TK-Endsystem (8, 9) verborgen bleibt.

37. TK-Endsystem nach Anspruch 36, **dadurch gekennzeichnet, dass** die Moduln ein lokales PPP-Modul (140) - oder ein funktional vergleichbares Modul - und ein dazu inverses lokales PPP/vergleichbares Modul (150) umfassen.

38. TK-Endsystem nach Anspruch 36, **dadurch gekennzeichnet, dass** ein Modul (196) vorgesehen ist, dass eine Ethernet-Schnittstelle oder eine funktional vergleichbare Schnittsstelle emuliert und logisch darüber liegenden Moduln signalisiert, dass von ihnen abgesandte Daten weitergereicht wurden.

39. TK-Endsystem nach Anspruch 38, **dadurch gekennzeichnet, dass** ein UDP-Modul (160) und ein IP-Modul (170) vorgesehen sind, wobei die Daten von der Ethemet-Schnittstelle (196) an das UDP-Modul (160) und weiter an das IP-Modul (170) gegeben werden, die zusätzliche Verkapselungen der Daten vornehmen.

40. TK-Endsystem nach Anspruch 38, **dadurch gekennzeichnet, dass** zusätzlich ein HDLC-Modul (185) - oder ein anderes funktional vergleichbares Datenübertragungsabschnitt-Sicherungs-Modul - vorgesehen ist, wobei die Daten von der Ethernet-Schnittstelle (196) an das HDLC-Modul (185) weitergegeben werden.

## Claims

1. Method for transmitting data between a first and a second telecommunications system, termed hereinafter a TC system, wherein at least one of the TC systems is a TC end system wherein
- at least one link used in a communications process between the two TC systems (1, 5), namely at least the logical L1 to L3 links/-associations in the sense of the OSI reference model, for transmitting data via at least one data transmission section is/are only completed when there is data actually present which is to be transmitted between the TC systems (1, 5)
- after the completion of the logical L1 to L3 links/associations the data actually present is transmitted
- it is determined when the transmission of this data via the at least one data transmission section is terminated, and
- immediately following the end of the data transmission or within a very short time interval after same a breakdown is induced of the previously completed logical L1 to L3 links/associations over this at least one data transmission section,
- without an L7 link between the TC systems (1, 5) or between one of the TC systems (1) and a further TC system (8,9) being affected by such a breakdown.

2. Method according to claim 1, **characterised in that** at the end of the data transmission a control command is generated to break down the logical L1 to L3 links/associations.

3. Method according to claim 2, **characterised in that** it is automatically determined by means of an algorithm when a transmission of the currently existing data has been completed, and after determining same a control command for breaking down the logical L1 to L3 links/associations is generated immediately or within a very short time interval thereafter.

4. Method according to at least one of the preceding claims, **characterised in that** a breakdown of the L1 to L3 links/associations is induced within a time interval of one second maximum, more particularly preferred within a time interval of one tenth second maximum after the end of the data transmission.

5. Method according to at least one of the preceding claims, **characterised in that** a breakdown of the L1 to L3 links/associations is induced within such a short time interval after the end of the data transmission that the end of the toll charges falls in the current charging band of the network operator who is providing the link.

6. Method according to at least one of the preceding claims, **characterised in that** the data to be transferred is collected up at the transmitting TC system and the completion of previously broken down L1 to L3 links/associations and the updated data transmission to the receiving TC system only takes place on reaching a specific data volume or a different designated event.

7. Method according to claim 6, **characterised in that** the data volume has a maximum size so that the transmission of the data can take place within a time span which is equal to the charging band or a multiple of the charging band of that TC network operator who has a part in the build up of the previously broken down L1 to L3 links/associations and who of all these TC network operators causes the highest link and/or association time-dependent costs.

8. Method according to at least one of claims 1 to 5, **characterised in that** for certain privileged data the completion of a previously broken down L1 to L3 link/association is undertaken immediately after the presence of data at the transmitting TC system (1, 5).

9. Method according to at least one of the preceding claims, **characterised in that** the end of a data transmission is monitored by a monitoring system with a verification routine, which checks whether data is still to be transferred and induces the breakdown of the logical L1 to L3 links/associations as soon as it determines that data transmission is no longer taking place.

10. Method according to at least one of the preceding claims, **characterised in that** the transmitting TC system is a router of a local network which receives data from a number of apparatuses of the local network and transmits this data multiplexed to the other TC system.

11. Method according to at least one of the preceding claims, **characterised in that** a breakdown of the L1 to L3 links/associations and/or the completion of the broken down L1 to L3 links/associations is brought about by the transmitting and/or the receiving TC system and/or a system involved in the communications process.

12. Method according to at least one of the preceding claims, **characterised in that** the authentication when re-establishing a broken down logical L1 to L3 link/association takes place with reference to this broken down logical L1 to L3 link/association.

13. Method according to at least one of the preceding claims, **characterised in that** it is used in a communications process between a TC end system (1) and a server system (8, 9), more particularly an internet server, wherein
- the TC end system (1) is the first TC system and a gateway system (5) is the second TC system
- the TC end system (1) is connected to the gateway system (5) through at least one TC network (3, 10, 6)
- the gateway system (5) is an access point to a packet-switching network (6) or is connected to one such network
- data of the communication process to be transferred from the TC end system (1) to the server system (8, 9) is transferred from the former to the gateway system (5) and from this via the packet switching network (6) further to the server system (8, 9) wherein
- all Li-links/associations (3 ≤ i ≤ 7) between the TC end system (1) and the server system (8, 9) of the communications process remain unaffected from the view of the server system (8, 9) by a breakdown and subsequent renewed build up of at least one data transmission section of the logical L1 to L3 links therein between the TC end system (1) and the gateway system (5).

14. Method according to claim 13, **characterised in that** the IP address (130) of the TC end system in an internet link between the TC end system (1) and the server system (8, 9) remains unchanged during the breakdown and subsequent renewed build up of at least one data transmission section of the logical L1 to L3 links therein between the TC end system (1) and the gateway system (5).

15. Method according to claim 13 or 14, **characterised in that** the TC end system (1) involves a range of functions of a number of modules (150, 160, 170, 180; 196, 160, 170; 196, 185) in its data exchange with the gateway system (5), wherein the modules (150, 160, 170, 180 ; 196, 160, 170; 196, 185) operate so that a breakdown/build up of the L1 to L3 link over at least one data transmission section between the TC end system (1) and the gateway system (5) remains concealed from logical Li links from the level 3 (3 ≤ i ≤ 7) between the TC end system (1) and the server system (8, 9).

16. Method according to claim 15, **characterised in that** the TC end system (1) has locally a PPP module (140) - or a functionally comparable module - and a relatively inverse PPP/comparable module (150).

17. Method according to claim 15 **characterised in that** the TC end system (1) emulates an Ethernet interface (196) or a functionally comparable interface.

18. Method according to claim 17, **characterised in that** the data is passed from the Ethernet interface (196) to an UDP module (160) and further to an IP module (170) which provide additional encapsulations of the data which are again removed in the gateway system (5).

19. Method according to claim 17, **characterised in that** the data is forwarded from the Ethernet interface (196) to an HDLC module (185) - or a different functionally comparable data transmission section security module -.

20. Method according to at least one of claims 15 to 19, **characterised in that** the TC end system (1) provides the data to be sent by same with at least one additional encapsulation which is again removed in the gateway system (5).

21. Method according to claim 20, **characterised in that** the TC end system (1) encapsulates the data to be sent out by same on the level of the transport layer (120, 160) and the network layer (130, 170) and the lower of the two encapsulations (160, 170) is removed again (225, 220) from the gateway system (5).

22. Method according to at least one of claims 13 to 21, **characterised in that** the server system (8) contains data or receives data from third systems (9) which are to be downloaded at the TC end system (1) - (downstream data), and this downstream data is transferred at least in part through at least a further alternative TC network (13, 14), more particularly a broadband satellite or TV cable network, directly to the TC end system (1), more particularly need not run via the gateway system (5).

23. Method according to claim 22, **characterised in that** the downstream data is transmitted to the TC end system (1) by using several satellite networks.

24. Method according to claim 22 or 23, **characterised in that** the downstream data of one application is gathered at the server system (8) until it is present in its entirety, and is then transmitted to the TC end system (1) in unison.

25. Telecommunications arrangement for carrying out the method according to claim 1 with a first TC system (1), a second TC system (5) and infrastructure for producing a telecommunications link between the TC systems wherein at least one of the TC systems (1) is a TC end system, with
- means for establishing a link which only complete at least a link used in a communications process between the two TC systems (1, 5), namely at least the logical L1 to L3 links/associations in the sense of the OSI reference model, for data transmission via at least one data transmission section , when data which is to be transmitted between the TC systems (1, 5) is actually present,
- means for transmitting data between the TC end systems (1, 5)
- means for determining when the transmission of this data has ended, and
- means for breaking down the link which immediately following the end of the data transmission or within a very short time interval after same induce a breakdown of the previously completed logical L1 to L3 links/associations over this at least one data transmission section
- wherein the means for establishing the link and the means for breaking down the link leave an L7 link between the TC systems (1, 5) or between one of the TC systems (1) and a further TC system (8, 9) unaffected by such a build up and breakdown.

26. Telecommunications arrangement according to claim 25, **characterised in that** the means for breaking down the link send out a control command to break down the link as soon as the data transmission is completed.

27. Telecommunications arrangement according to claim 26, **characterised in that** the determination means comprise an algorithm which automatically determines when a transmission of currently existing data has concluded, and the means for breaking down the link produce a control command to break down the logical L1 to L3 links/associations immediately or within a very short time span after this determination.

28. Telecommunications arrangement according to at least one of claims 25 to 27, **characterised in that** the telecommunications arrangement has:
- at least one communications network (3, 10) to which a TC end system (1) is connected,
- a packet switching network (6) in which a server system (8, 9) is disposed or to which the server system (8, 9) has access; and
- a gateway system (5) which provides an access point to the packet switching network (6) or is connected to one such network,
- wherein data to be transmitted from the TC end system (1) to the server system (8, 9) is transmitted via the at least one communications network (3, 10) to the gateway system (5) and then from the gateway system (5) via the packet switching network (6) further to the server system (8, 9), and
- the said means for establishing the link, the determination means and the means for breaking down the link are contained in the TC end system (1) and/or the gateway system (5).

29. Telecommunications arrangement according to claim 28, **characterised in that** the means for establishing the link and the means for breaking down the link leave untouched the IP address of the TC end system (1) in an internet link between the TC end system (1) and the server system (8, 9) during a breakdown and subsequent renewed establishment of at least one data transmission section of the L1 to L3 links therein between the TC end system (1) and the gateway system (5).

30. Telecommunications arrangement according to at least one of claims 25 to 29, **characterised in that** the first TC system (1) and/or the second TC system (5) has a number of modules (150, 160, 170, 180; 196, 160, 170; 196, 185; 210, 220, 225 ,230; 210, 235) which operate so that a breakdown/establishment of the L1 to L3 links over at least one data transmission section between the TC systems (1,5) remains concealed from superposed logical Li links of level 3 (3 ≤ i ≤ 7) between the TC end system (1) and the server system (8, 9).

31. TC end system for carrying out the method according to claim 1, with
- means for establishing a link which only complete at least one link used in a communications process to a further TC system (5), namely at least the logical L1 to L3 links/associations in the sense of the OSI reference model, for data transmission over at least one data transmission section , when data which is to be transmitted between the TC systems (1, 5) actually exists
- means for transmitting the currently existing data to the further TC system (5)
- means for determining when the transmission of this data has ended, and
- means for breaking down the link which induce a breakdown of the previously completed logical L1 to L3 links/associations immediately or within a very short time span following the end of the data transmission,
- wherein the means for establishing the link and the means for breaking down the link leave an L7 link between the TC end system (1) and the further TC system (5) or between the TC end system (1) and another TC system (8, 9) untouched by such a build up or breakdown.

32. TC end system according to claim 31, **characterised in that** the means for breaking down the link send out a control command for breaking down the link as soon as the data transmission has ended.

33. TC end system according to claim 31 or 32, **characterised in that** the determination means comprise an algorithm which automatically determines when a transmission of currently existing data has finished, and the means for breaking down the link produce a control command to break down the logical L1 to L3 links/associations immediately or within a very short time span after this determination.

34. TC end system according to at least one of claims 31 to 33, **characterised in that** the means for establishing the link and the means for breaking down the link from the view of the other TC system (8, 9) leave the IP address of the TC system (1) in an internet link to another TC system (8, 9) unaffected by a breakdown and subsequent build up of at least one data transmission section of the L1 to L3 links to the further TC system (5).

35. TC end system according to at least one of claims 31 to 34, **characterised by** a data memory which collects the data which is to be transmitted wherein on reaching a specific data volume the means for establishing the link bring about the completion of the broken down L1 to L3 links /associations and the current data transmission.

36. TC end system according to at least one of claims 31 to 35, **characterised in that** the TC end system (1) has a number of modules (150, 160, 170, 180; 196, 160, 170; 196, 185) which operate so that a breakdown/build up of the L1 to L3 links over at least one data transmission section between the TC system (1) and the further TC system (5) remains concealed from superposed logical Li links of level 3 (3 ≤ I ≤ 7) between the TC end system (1) and the other TC end system (8, 9).

37. TC end system according to claim 36, **characterised in that** the modules comprise a local PPP module (140) - or a functionally comparable module - and a relatively inverse local PPP/comparable module (150).

38. TC end system according to claim 36, **characterised in that** a module (196) is provided which emulates an Ethernet interface or a functionally comparable interface and signals to modules which are logically above same that data sent out by same has been passed on.

39. TC end system according to claim 38, **characterised in that** a UDP module (160) and an IP module (170) are provided wherein the data is passed from the Ethernet interface (196) to the UDP module (160) and further to the IP module (170) which undertake additional encapsulations of the data.

40. TC end system according to claim 38, **characterised in that** additionally an HDLC module (185) - or another functionally comparable data transmission section security module - is provided wherein the data is forwarded from the Ethernet interface (196) to the HDLC module (185).

## Revendications

1. Procédé de transmission de données entre un premier et un deuxième système de télécommunication, désigné par la suite par système TC, un des systèmes TC étant un système TC terminal, moyennant quoi
- au moins une liaison utilisée dans une procédure de communication entre les deux systèmes TC (1, 5), à savoir au moins les liaisons logiques ou associations des couches L1 à L3 au sens du modèle de référence OSI, à des fins de transmission de données par le biais d'au moins une section de transmission de données n'est ensuite complétée que si des données à transmettre entre les systèmes TC (1, 5) sont actuellement présentes,
- après l'opération de compléter les liaisons logiques ou associations des couches L1 à L3, les données actuellement présentes sont transmises,
- il est déterminé quand la transmission de ces données par le biais d'au moins une section de transmission de données est terminée, et
- consécutivement à la fin de la transmission de données, immédiatement ou au cours d'un très bref laps de temps, il est ordonné un relâchement des liaisons logiques ou associations des couches L1 à L3 complétées auparavant par le biais de cette au moins une section de transmission de données,
- sans qu'une liaison de couche 7 entre les systèmes TC (1, 5) ou entre un des systèmes TC (1) et un autre système TC (8, 9) soit concernée par un tel relâchement.

2. Procédé selon la revendication 1, **caractérisé en ce que**, après la fin de la transmission de données, il est généré une instruction de commande destinée au relâchement des liaisons logiques ou associations des couches L1 à L3.

3. Procédé selon la revendication 2, **caractérisé en ce qu'**il est déterminé automatiquement au moyen d'un algorithme quand une transmission des données actuellement présentes est terminée, et immédiatement ou au cours d'un très bref laps de temps après cette détermination, il est généré une instruction de commande destinée au relâchement des liaisons logiques ou associations des couches L1 à L3.

4. Procédé selon au moins une des revendications précédentes, **caractérisé en ce qu'**un relâchement des liaisons logiques ou associations des couches L1 à L3 est ordonné au cours d'un intervalle de temps au maximum d'une seconde, en particulier de préférence au cours d'un intervalle de temps au maximum d'un dixième de seconde après la fin de la transmission de données.

5. Procédé selon au moins une des revendications précédentes, **caractérisé en ce qu'**il est ordonné un relâchement des liaisons logiques ou associations des couches L1 à L3 après la fin de la transmission de données au cours d'un laps de temps si bref que la fin de la communication taxée tombe dans la période d'horloge de taxation actuelle de l'opérateur de réseau qui met à disposition la liaison.

6. Procédé selon au moins une des revendications précédentes, **caractérisé en ce que** des données à transmettre sont accumulées au niveau du système TC émetteur et **en ce que** l'opération de compléter des liaisons ou associations de couches L1 à L3 relâchées auparavant et la transmission actuelle de données au système TC récepteur ont lieu seulement après qu'un volume défini de données ou un autre événement défini a été atteint.

7. Procédé selon la revendication 6, **caractérisé en ce que** le volume de données présente une taille maximale de manière telle que la transmission des données puisse avoir lieu au cours d'un intervalle de temps qui est identique à la période d'horloge de taxation ou un multiple de la période d'horloge de taxation de l'opérateur du réseau TC qui participe à l'établissement des liaisons ou associations de couches L1 à L3 relâchées auparavant et qui, parmi tous les opérateurs du réseau de TC, cause les coûts les plus élevés en fonction du temps pour les liaisons ou associations.

8. Procédé selon au moins une des revendications 1 à 5, **caractérisé en ce que**, pour certaines données privilégiées, l'opération de compléter une liaison ou association de couches L1 à L3 établie auparavant est réalisée après que les données sont présentes au niveau du système TC émetteur (1, 5).

9. Procédé selon au moins une des revendications précédentes, **caractérisé en ce que** la fin d'une transmission de données est surveillée par un système de surveillance avec une routine de vérification qui vérifie si des données seront encore transmises et ordonne le relâchement des liaisons logiques ou associations des couches L1 à L3 dès qu'elle détermine qu'une transmission de données n'a plus lieu.

10. Procédé selon au moins une des revendications précédentes, **caractérisé en ce que** le système TC émetteur est un routeur d'un réseau local qui contient des données d'une multitude d'appareils du réseau local et qui transmet ces données multiplexées à l'autre système TC.

11. Procédé selon au moins une des revendications précédentes, **caractérisé en ce qu'**un relâchement des liaisons logiques ou associations des couches L1 à L3 et/ou l'opération de compléter des liaisons ou associations de couches L1 à L3 relâchées est ordonné par le système TC émetteur et/ou récepteur et/ou un système impliqué dans la procédure de communication.

12. Procédé selon au moins une des revendications précédentes, **caractérisé en ce que** l'authentification lors du rétablissement d'une liaison logique ou association de couches L1 à L3 relâchée se fait en référence à cette liaison logique ou association de couches L1 à L3 relâchée.

13. Procédé selon au moins une des revendications précédentes, **caractérisé en ce qu'**il est mis en oeuvre dans une procédure de communication entre un système TC terminal (1) et un système serveur (8, 9), en particulier un serveur Internet, moyennant quoi
- le système TC terminal (1) est le premier système TC et un système passerelle (5) est le deuxième système TC,
- le système TC terminal (1) est relié au système passerelle (5) par le biais d'au moins un réseau TC (3, 10, 6),
- le système passerelle (5) est un point d'accès à un réseau à commutation de paquets (6) ou est relié à un tel réseau,
- des données de la procédure de communication à transmettre du système TC terminal (1) au système serveur (8, 9) sont transmises du premier système au système passerelle (5) et ensuite de celui-ci au système serveur (8, 9) en passant par le réseau à commutation de paquets (6), moyennant quoi
- toutes les liaisons ou associations des couches Li (3 ≤ i ≤ 7) entre le système TC terminal (1) et le système serveur (8, 9) de la procédure de communication ne sont pas touchées, du point de vue du système serveur (8, 9), par un relâchement et un nouvel établissement consécutif d'au moins une section de transmission de données des liaisons logiques des couches L1 à L3 entre le système TC terminal (1) et le système passerelle (5).

14. Procédé selon la revendication 13, **caractérisé en ce que** l'adresse IP (130) du système TC terminal (1) demeure inchangée dans une liaison Internet entre le système TC terminal (1) et le système serveur (8, 9) au cours d'un relâchement et d'un nouvel établissement consécutif d'au moins une section de transmission de données des liaisons logiques des couches L1 à L3 entre le système TC terminal (1) et le système passerelle (5).

15. Procédé selon la revendication 13 ou 14, **caractérisé en ce que** le système TC terminal (1) implique des fonctionnalités d'une pluralité de modules (150, 160, 170, 180 ; 196, 160, 170 ; 196, 185) dans son échange de données avec le système passerelle (5), moyennant quoi les modules (150, 160, 170, 180 ; 196, 160, 170 ; 1913, 185) font en sorte qu'un relâchement ou établissement de la liaison de couches L1 à L3 par le biais d'au moins une section de transmission de données entre le système TC terminal (1) et le système passerelle (5) reste dissimulé aux liaisons logiques des couches Li à partir du niveau 3 (3 ≤ i ≤ 7) entre le système TC terminal (1) et le système serveur (8, 9).

16. Procédé selon la revendication 15, **caractérisé en ce que** le système TC terminal (1) présente localement un module PPP (140) - ou un module fonctionnel comparable - et un module PPP ou comparable (150) inverse du premier.

17. Procédé selon la revendication 15, **caractérisé en ce que** le système TC terminal (1) émule une interface Ethernet (196) ou une interface fonctionnelle comparable.

18. Procédé selon la revendication 17, **caractérisé en ce que** les données de l'interface Ethernet (196) sont fournies à un module UDP (160) et ensuite à un module IP (170) qui réalisent des encapsulages supplémentaires des données qui sont par ailleurs supprimés dans le système passerelle (5).

19. Procédé selon la revendication 17, **caractérisé en ce que** les données sont transmises de l'interface Ethernet (196) à un module HDLC (185) - ou à un autre module fonctionnel comparable de sécurité de section de transmission de données.

20. Procédé selon au moins une des revendications 15 à 19, **caractérisé en ce que** le système TC terminal (1) munit les données qu'il doit émettre d'au moins un encapsulage supplémentaire qui est par ailleurs supprimé dans le système passerelle (6).

21. Procédé selon la revendication 20, **caractérisé en ce que** le système TC terminal (1) encapsule les données, qu'il doit émettre, sur le niveau de la couche transport (120, 160) et de la couche réseau (130, 170) et que les encapsulages inférieurs des deux encapsulages (160, 170) sont par ailleurs supprimés (225, 220) par le système passerelle (5).

22. Procédé selon au moins une des revendications 13 à 21, **caractérisé en ce que** le système serveur (8) contient des données ou reçoit des données d'un troisième système (9) qui doivent être téléchargées au système TC terminal (1) (données descendantes), et **en ce que** ces données descendantes sont transmises au moins partiellement par le biais d'au moins un autre réseau TC de rechange (13, 14), en particulier un réseau large bande satellitaire ou un réseau de télévision câblée, immédiatement au système TC terminal (1), en particulier sans devoir passer par le biais du système passerelle (5).

23. Procédé selon la revendication 22, **caractérisé en ce que** les données descendantes sont transmises au système TC terminal (1) en employant plusieurs réseaux satellitaires.

24. Procédé selon la revendication 22 ou 23, **caractérisé en ce que** les données descendantes d'une application sont accumulées au niveau du système serveur (8) jusqu'à ce qu'elles soient intégralement présentes et sont ensuite transmises ensemble au système TC terminal (1).

25. Dispositif de télécommunication destiné à exécuter le procédé selon la revendication 1 avec un premier système TC (1), un deuxième système TC (5) et une infrastructure pour réaliser une liaison de télécommunication entre les systèmes TC, moyennant quoi au moins un des systèmes TC (1) est un système TC terminal, avec
- des moyens d'établissement de liaisons, qui complètent au moins une liaison utilisée dans une procédure de communication entre les deux systèmes TC (1, 5), à savoir au moins les liaisons logiques ou associations des couches L1 à L3 au sens du modèle de référence OSI, à des fins de transmission de données par le biais d'au moins une section de transmission de données uniquement si des données à transmettre entre les systèmes TC (1, 5) sont actuellement présentes,
- des moyens de transmission de données entre les systèmes TC (1, 5),
- des moyens de détermination du moment auquel la transmission de ces données est terminée, et
- des moyens d'établissement de liaisons qui, consécutivement à la fin de la transmission de données, ordonnent immédiatement ou au cours d'un très bref laps de temps un relâchement des liaisons logiques ou associations des couches L1 à L3 complétées auparavant par le biais de cette au moins une section de transmission de données,
- moyennant quoi les moyens d'établissement de liaisons et les moyens de relâchement de liaisons font qu'une liaison de couche L7 entre les systèmes TC (1, 5) ou entre un des systèmes TC (1) et un autre système TC (8, 9) ne soit pas affectée par un tel établissement et un tel relâchement.

26. Dispositif de télécommunication selon la revendication 25, **caractérisé en ce que** les moyens de relâchement de liaisons émettent une instruction de commande pour le relâchement des liaisons dès que la transmission de données est finie.

27. Dispositif de télécommunication selon la revendication 26, **caractérisé en ce que** les moyens de détermination comprennent un algorithme qui détermine automatiquement quand une transmission de données actuellement présente est terminée, et **en ce que** les moyens de relâchement de liaisons génèrent après cette détermination immédiatement ou au cours d'un très bref laps de temps une instruction de commande pour relâcher les liaisons logiques ou associations des couches L1 à L3.

28. Dispositif de télécommunication selon au moins une des revendications 25 à 27, **caractérisé en ce que** le dispositif de télécommunication présente :
- au moins un réseau de communication (3, 10) auquel est connecté un système TC terminal (1),
- un réseau à commutation de paquets (6) dans lequel est disposé un système serveur (8, 9) ou auquel le système serveur (8, 9) a accès ; et
- un système passerelle (5) qui met à disposition un point d'accès au réseau à commutation de paquets (6) ou qui est relié à un tel réseau,
- moyennant quoi des données à transmettre du système TC terminal (1) au système serveur (8, 9) par le biais d'au moins un réseau de communication (3, 10) sont transmises au système passerelle (5) et ensuite du système passerelle (5) au système serveur (8, 9) par le biais du réseau à commutation de paquets (6), et
- lesdits moyens d'établissement de liaisons, lesdits moyens de détermination et lesdits moyens de relâchement de liaisons sont contenus dans le système TC terminal (1) et/ou dans le système passerelle (5).

29. Dispositif de télécommunication selon la revendication 28, **caractérisé en ce que** les moyens d'établissement de liaisons et les moyens de relâchement de liaisons laissent inchangée l'adresse IP du système TC terminal (1) dans une liaison Internet entre le système TC terminal (1) et le système serveur (8, 9) lors d'un relâchement et d'un nouvel établissement consécutif d'au moins une section de transmission de données des liaisons de couches L1 à L3 entre le système TC terminal (1) et le système passerelle (5).

30. Dispositif de télécommunication selon au moins une des revendications 25 à 29, **caractérisé en ce que** le premier système TC (1) et/ou le deuxième système TC (5) présente une pluralité de modules (150, 160, 170, 180 ; 196, 160, 170 ; 196, 185 ; 210, 220, 225, 230 ; 210, 235) qui font en sorte qu'un relâchement ou établissement des liaisons des couches L1 à L3 par le biais d'au moins une section de transmission de données entre le système TC (1, 5) reste dissimulé aux liaisons logiques des couches Li supérieures à partir du niveau 3 (3 ≤ i ≤ 7) entre le système TC terminal (1) et le système serveur (8, 9).

31. Système de télécommunication terminal destiné à exécuter le procédé selon la revendication 1, avec
- des moyens d'établissement de liaisons qui complètent au moins une liaison utilisée dans une procédure de communication à un autre système TC (5), à savoir au moins les liaisons logiques ou associations des couches L1 à L3 au sens du modèle de référence OSI, à des fins de transmission de données par le biais d'au moins une section de transmission de données uniquement si des données à transmettre sont actuellement présentes entre les systèmes TC (1, 5),
- des moyens de transmission des données actuellement présentes à l'autre système TC
- des moyens de détermination du moment auquel la transmission de ces données est terminée, et
- des moyens de relâchement de liaisons qui, consécutivement à la fin de la transmission de données, ordonnent immédiatement ou au cours d'un très bref laps de temps un relâchement des liaisons logiques ou associations des couches L1 à L3 auparavant complétées,
- moyennant quoi les moyens d'établissement de liaisons et les moyens de relâchement de liaisons font qu'une liaison de couche L7 entre le système TC terminal (1) et l'autre système TC (5) ou entre le système TC terminal (1) et un autre système TC (8, 9) ne soit pas touchée par un tel établissement et un tel relâchement.

32. Système TC terminal selon la revendication 31, **caractérisé en ce que** les moyens de relâchement de liaisons émettent une instruction de commande pour le relâchement des liaisons dès que la transmission de données est terminée.

33. Système TC terminal selon la revendication 31 ou 32, **caractérisé en ce que** les moyens de détermination comprennent un algorithme qui détermine automatiquement quand une transmission de données actuellement présentes est terminée, et **en ce que**, après cette détermination, les moyens de relâchement de liaisons génèrent immédiatement ou au cours d'un très bref laps de temps une instruction de commande destinée au relâchement des liaisons logiques ou associations des couches L1 à L3.

34. Système TC terminal selon au moins une des revendications 31 à 33, **caractérisé en ce que** les moyens d'établissement de liaisons et les moyens de relâchement de liaisons laissent inchangée, du point de vue de l'autre système TC (8, 9), l'adresse IP du système TC (1) dans une liaison Internet à l'autre système TC (8, 9) par un relâchement suivi d'un établissement d'au moins une section de transmission de données des liaisons de couche L1 à L3 à un autre système TC (5).

35. Système TC terminal selon au moins une des revendications 31 à 34, **caractérisé par** une mémoire de données qui accumule des données à transmettre, moyennant quoi, lorsque les données ont atteint un volume défini, les moyens d'établissement de liaisons font réaliser l'opération de compléter les liaisons ou associations des couches L1 à L3 relâchées et la transmission actuelle des données.

36. Système TC terminal selon au moins une des revendications 31 à 35, **caractérisé en ce que** le système TC terminal (1) présente une pluralité de modules (150, 160, 170, 180 ; 196, 160, 170 ; 196, 185) qui font en sorte qu'un relâchement ou établissement des liaisons de couche L1 à L3 par le biais d'au moins une section de transmission de données entre le système TC (1) et l'autre système TC (5) restent dissimulés aux liaisons de couches logiques supérieures Li à partir du niveau 3 (3 ≤ 1 ≤ 7) entre le système TC terminal (1) et l'autre système TC terminal (8, 9).

37. Système TC terminal selon la revendication 36, **caractérisé en ce que** les modules comprennent un module PPP local (140) - ou un module fonctionnel comparable - et un module PPP local /comparable inverse du premier (150).

38. Système TC terminal selon la revendication 36, **caractérisé en ce qu'**il est prévu un module (196) qui émule une interface Ethernet ou une interface fonctionnelle comparable et signale aux modules logiquement supérieurs que des données qu'il a envoyées ont été transférées.

39. Système TC terminal selon la revendication 38, **caractérisé en ce qu'**un module UDP (160) et un module IP (170) sont prévus, moyennant quoi les données sont fournies de l'interface Ethernet (196) au module UDP (160) et ensuite au module IP (170) qui réalisent des encapsulages supplémentaires des données.

40. Système TC terminal selon la revendication 38, **caractérisé en ce qu'**il est prévu un module HDLC (185) supplémentaire - ou un autre module fonctionnel comparable de sécurité de section de transmission de données -, moyennant quoi les données sont transférées de l'interface Ethernet (196) au module HDLC (185).
